(19) Europäisches Patentamt
European Patent Office
Office européen des brevets

(11) **EP 2 564 232 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: **11799605.8**

(22) Anmeldetag: **29.11.2011**

(51) Int Cl.:
*G01S 11/10* (2006.01)   *G07B 15/06* (2011.01)
*G08G 1/01* (2006.01)

(86) Internationale Anmeldenummer:
**PCT/AT2011/000480**

(87) Internationale Veröffentlichungsnummer:
**WO 2012/075515 (14.06.2012 Gazette 2012/24)**

(54) **VERFAHREN UND VORRICHTUNGEN ZUM ERMITTELN DES ABSTANDS ZWISCHEN EINER FUNKBAKE UND EINEM FAHRZEUGGERÄT**

METHOD AND DEVICES FOR DETERMINING THE DISTANCE BETWEEN A RADIO BEACON AND A VEHICLE DEVICE

PROCÉDÉ ET DISPOSITIF POUR LA DÉTERMINATION DE LA DISTANCE ENTRE UNE BALISE RADIO ET UN APPAREIL DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2010 EP 10450189**

(43) Veröffentlichungstag der Anmeldung:
**06.03.2013 Patentblatt 2013/10**

(73) Patentinhaber: **Kapsch TrafficCom AG**
**1120 Wien (AT)**

(72) Erfinder:
• **SMELY, Dieter**
**A-2320 Schwechat (AT)**

• **WINKLER, Josef**
**A-2500 Baden (AT)**
• **NAGY, Oliver**
**A-1190 Wien (AT)**
• **PAIER, Alexander**
**A-1020 Wien (AT)**
• **POVOLNY, Robert**
**A-1190 Wien (AT)**

(74) Vertreter: **Weiser, Andreas**
**Patentanwalt**
**Kopfgasse 7**
**1130 Wien (AT)**

(56) Entgegenhaltungen:
**US-A- 5 790 052        US-A1- 2009 102 718**
**US-A1- 2009 303 004**

EP 2 564 232 B1

**Beschreibung**

Die vorliegende Erfindung betrifft ein Verfahren zum Ermitteln des Abstands zwischen einer Funkbake und einem sie passierenden Fahrzeuggerät in einem Straßenmautsystem, wobei zumindest eine der beiden Komponenten Funkbake und Fahrzeuggerät ein Signal mit einem bekannten zeitlichen Verlauf seiner Frequenz aussendet. Die Erfindung betrifft ferner eine Funkbake, eine Anlage und ein Fahrzeuggerät zur Implementierung eines derartigen Verfahrens.

In funkbakenbasierten Straßenmautsystemen, beispielsweise nach den DSRC- (dedicated short range communication), WAVE-(wireless access in a vehicle environment) oder ITS-G5- (intelligent transport systems generation 5) Standards der Normungsinstitute CEN bzw. ETSI, kommunizieren von den Fahrzeugen mitgeführte Fahrzeuggeräte (onboard units, OBUs) über Kurzreichweitenfunk mit geografisch verteilten Funkbaken, sobald sie diese passieren. Die Funkkommunikation dient in der Regel zum Verorten des Fahrzeugs auf den Funkabdeckungsbereich der Funkbake, um Ortsnutzungen zu vergebühren, oder einfach auch nur zum Absetzen von Mautdaten, die von der OBU erzeugt werden, an Funkbaken auf ihrem Weg.

Häufig ist es wünschenswert, den Abstand zu bestimmen, in dem ein Fahrzeug eine Funkbake passiert, z.B. für die Ahndung von Mautvergehen bei mehrspurigen Straßen: Passieren mehrere Fahrzeuge nebeneinander auf verschiedenen Fahrspuren die Funkbake und weist eine ihrer Funkkommunikationen auf ein Mautvergehen hin, z.B. eine fehlgeschlagene Mautgebührenabbuchung, einen ungenügenden Kontostand eines Verrechnungskontos, eine defekte oder falsch eingestellte OBU usw., oder soll eine von der Fahrspur abhängige Gebührenhöhe bzw. Maut (Mehrinsassen-Fahrspur) berechnet werden, dann ist es entscheidend, zu wissen, welches der nebeneinander fahrenden Fahrzeuge hierfür verantwortlich ist, um dieses z.B. visuell vor Ort oder auf einem Beweisfoto des Straßenabschnitts der Bake identifizieren zu können.

Zur Bestimmung des Abstands sind derzeit verschiedene Verfahren bekannt. Eine Lösung besteht darin, in der Funkbake mehrere örtlich versetzte Empfangsantennen zu verwenden, um aus Phasendifferenzmessungen zwischen den von den einzelnen Antennen empfangenen OBU-Signalen die Positionen der OBUs im Funkempfangsfeld zu bestimmen. Eine andere Lösung ist aus der US 5,790,052 bekannt und beruht auf Dopplermessungen der unterschiedlichen Relativgeschwindigkeiten einer OBU gegenüber örtlich versetzten Empfangsantennen einer Funkbake, um aus dem Verhältnis der Geschwindigkeitsmesswerte das Verhältnis der Abstände zu den beiden Empfangsantennen zu bestimmen. Schließlich wäre es auch möglich, für jede Fahrspur eine separate Funkbake mit geringem Funkabdeckungsbereich zu verwenden. Alle diese bekannten Lösungen sind aufwendig, nicht zuletzt weil sie auf mehreren Empfangsantennen beruhen.

Die Erfindung setzt sich zum Ziel, Verfahren und Vorrichtungen zur Bestimmung des Abstands zwischen einer OBU und einer Funkbake in einem Straßenmautsystem zu schaffen, welche geringeren apparativen Aufwand zur Umsetzung benötigen als die bekannten Lösungen.

Dieses Ziel wird in einem ersten Aspekt der Erfindung mit einem Verfahren der einleitend genannten Art erreicht, welches sich auszeichnet durch die Schritte:

Empfangen des Signals in der anderen der beiden Komponenten bei der Passage und Aufzeichnen des zeitlichen Verlaufes seiner Frequenz relativ zum bekannten zeitlichen Verlauf;

Detektieren einer einen ersten Schwellwert überschreitenden Änderung im aufgezeichneten Frequenzverlauf;

Aufsuchen zweier zeitlich vor und nach der detektierten Änderung liegender Fernbereiche im Frequenzverlauf, welche eine Frequenzänderung unter einem zweiten Schwellwert zeigen;

Skalieren des aufgezeichneten Frequenzverlaufes derart, dass die Fernbereiche vorgegebene Werte annehmen; und

Ermitteln des genannten Abstandes aus dem skalierten Frequenzverlauf.

Die Erfindung macht sich den Umstand zunutze, dass die dopplerbedingte Frequenzänderung des Funkbaken- bzw. OBU-Signals zum Zeitpunkt der unmittelbaren Passage, wenn der Abstand minimal ist, umgekehrt proportional zu dem Normalabstand zwischen Funkbake und OBU ist, sofern der Frequenzverlauf auf die Relativgeschwindigkeit zwischen Bake und Fahrzeug normiert wird. Letzteres wird durch Auswertung des Frequenzverlaufs in "Fernbereichen" bewerkstelligt: In diesen Fernbereichen ist die gegenseitige Entfernung der Komponenten im Vergleich zum Normalabstand sehr groß und dieser vernachlässigbar, so dass das Ausmaß der Dopplerverschiebung dort im Wesentlichen nur von der Eigengeschwindigkeit abhängt und diese daraus bestimmbar ist. In weiterer Folge kann aus der Analyse des um die Eigengeschwindigkeit kompensierten Frequenzverlaufs im Nahbereich der Bake, wo die größte Änderung ("Dopplersprung") des Frequenzverlaufs auftritt, die Abhängigkeit vom Normalabstand und damit dieser selbst ermittelt werden. Im Ergebnis kann mit einem einzigen Empfänger und einer einzigen Antenne der Passageabstand alleine aus der Funkkommunikation zwischen OBU und Funkbake bestimmt werden.

Der skalierte Frequenzverlauf kann im Nahbereich auf verschiedenste Arten signalanalytisch ausgewertet werden. Gemäß einer ersten Ausführungsform der Erfindung wird der genannte Abstand aus der Steigung des skalierten Frequenzverlaufes in einem Wendepunkt desselben ermittelt. Die Steigung im Wendepunkt ist umgekehrt proportional zum Passageabstand und kann beispielsweise durch Differentiation einfach ermittelt werden.

Gemäß einer alternativen Ausführungsform der Erfindung kann der genannte Abstand aus einem zwischen einem Wendepunkt des skalierten Frequenzverlaufes und einem Fernbereich liegenden Frequenzwert des skalierten Frequenzverlaufs ermittelt werden. An einem solchen Punkt, der sowohl in einem Abstand zum Wendepunkt als auch in einem Abstand zu den Fernbereichen liegt, ist der Frequenzwert des skalierten Frequenzverlaufs selbst ein signifikantes Maß für den Abstand: Je größer der Frequenzwert, desto kleiner ist der Passageabstand, und umgekehrt. Dieses Kriterium erübrigt eine Differentiation des Frequenzverlaufs; da die Proportionalität jedoch nichtlinear ist, ist in der Regel eine Umrechnungstabelle zur Ermittlung des Passageabstands von Vorteil.

Eine weitere alternative Ausführungsform besteht darin, dass der genannte Abstand aus einem Integral des skalierten Frequenzverlaufes über einen zwischen seinem Wendepunkt und einem Fernbereich liegenden Abschnitt des skalierten Frequenzverlaufs ermittelt wird. Auch das Integral des skalierten Frequenzverlaufs ist ein signifikantes Kriterium für den Passageabstand. So können die Frequenzwerte des skalierten Frequenzverlaufs z.B. zwischen dem Wendepunkt und einem der genannten Fernbereich aufintegriert werden, und das Integral ("Fläche unter der Kurve") ist ein - wenn auch nichtlineares - Maß für den Passageabstand: Je größer das Integral, desto kleiner ist der Passageabstand, und umgekehrt. Wieder ist eine Tabelle zur Umrechnung der nichtlinearen Proportionalität zwischen Integral und Passageabstand von Vorteil.

Das Verfahren der Erfindung kann zwischen Funkbake und OBU in beiden Richtungen ausgeübt werden, d.h. sowohl in der OBU auf Grundlage einer Auswertung eines Signals der Funkbake als auch in der Funkbake auf Grundlage einer Auswertung eines Signals der OBU, oder auch in beiden Komponenten gleichzeitig. In einer ersten Ausführungsform der Erfindung wird demgemäß das Signal von der Funkbake ausgesandt und vom Fahrzeuggerät empfangen, wobei die genannten Schritte des Aufzeichnens, Detektierens, Aufsuchens, Skalierens und Ermittelns vom Fahrzeuggerät durchgeführt werden, wodurch ein Fahrzeuggerät seinen Passageabstand zu einer Funkbake bestimmen kann.

Das von der Funkbake ausgesandte Signal braucht nicht notwendigerweise kontinuierlich ausgesandt zu werden, es kann bevorzugt auch intermittierend ausgesandt und der Frequenzverlauf zeitdiskret für Zeitpunkte, zu denen das Signal empfangen wird, verarbeitet werden. Dadurch werden zeitdiskrete Abtastwerte des Frequenzverlaufs ermittelt; liegen genügend Abtastwerte in ausreichend kurzen Zeitabständen vor, kann daraus der Abstand mit hinreichender Genauigkeit bestimmt werden.

Diese Ausführungsform eignet sich besonders für den Anwendungsfall, dass das Signal durch ein wiederholtes Abfragesignal der Funkbake gebildet wird, das passierende Fahrzeuggeräte zur Antwort auffordert. Wenn das Straßenmautsystem beispielsweise nach dem CEN-DSRC- oder WAVE- bzw. ITS-G5-Standard arbeitet und demgemäß die Funkbake einen CEN-DSRC-, WAVE- oder ITS-G5-Sendeempfänger hat, kann das genannte intermittierende Signal eine periodisch von der Funkbake ausgestrahlte "Beacon-Service-Table"-Nachricht (BST) gemäß dem CEN-DSRC-Standard oder eine "WAVE-Service-Announcement"-Nachricht (WSA) gemäß dem WAVE- bzw. ITS-G5-Standard sein.

Eine besonders bevorzugte Variante dieser Ausführungsform zeichnet sich dadurch aus, dass die Wiederholungsrate des Abfragesignals adaptiv an einen zumindest näherungsweisen Messwert der Entfernung zwischen Funkbake und Fahrzeuggerät angepasst wird. Dadurch kann eine größere zeitliche Auflösung und damit Anzahl von Abtastwerten der Frequenzverläufe in der Nähe des interessierenden Dopplersprungs erreicht werden, was die Genauigkeit der Abstandsbestimmung erhöht.

Die Entfernung zwischen Funkbake und Fahrzeuggerät kann besonders bevorzugt näherungsweise aus der Empfangssignalstärke des in der Funkbake empfangenen Antwort-Signals des Fahrzeuggeräts bestimmt werden, was einen gesonderten Entfernungsmesssensor erübrigt.

In einer alternativen Ausführungsform kann das Verfahren in der Funkbake ausgeübt werden, um den Abstand passierender Fahrzeuggeräte zu ermitteln, indem das Signal vom Fahrzeuggerät ausgesandt und von der Funkbake empfangen wird, wobei die genannten Schritte des Aufzeichnens, Detektierens, Aufsuchens, Skalierens und Ermittelns von der Funkbake durchgeführt werden.

Auch in dieser Ausführungsform muss das Signal nicht notwendigerweise kontinuierlich vorliegen, sondern kann intermittierend ausgesandt und der Frequenzverlauf zeitdiskret für Zeitpunkte, zu denen das Signal empfangen wird, verarbeitet werden. Beispielsweise kann das Signal durch eine Folge von Antwortsignalen des Fahrzeuggeräts gebildet werden, die jeweils als Antwort auf ein wiederholtes Abfragesignal der Funkbake gegeben werden. In den genannten CEN-DSRC- und WAVE- bzw. ITS-G5-Standards können solche wiederholten Abfragesignale der Funkbake BST- oder WSA-Nachrichten oder auch bloße "Echo"-Nachrichten sein, welche von einer Funkbake ausgesandt werden, um eine OBU zur bloßen Wiederholung einer Nachricht, z.B. zu Prüfzwecken, aufzufordern.

Auch in dieser Ausführungsform kann die Wiederholungsrate des Abfragesignals adaptiv an einen zumindest näherungsweisen Messwert der Entfernung zwischen Funkbake und Fahrzeuggerät angepasst werden, was die Genauigkeit der Bestimmung der Steigung im Wendepunkt und damit der Abstandsbestimmung erhöht. Besonders bevorzugt wird zur näherungsweisen Entfernungsbestimmung gleich die Empfangssignalstärke des in der Funkbake empfangenen und für die Abstandsbestimmung ausgewerteten Signals des Fahrzeuggeräts herangezogen, so dass kein gesonderter Entfernungsmesssensor für diese Zwecke erforderlich ist.

In einer dritten Variante können sowohl die Funkbake als auch das Fahrzeuggerät jeweils auf die geschilderte Art und Weise ihren Abstand zur jeweils anderen Komponente ermitteln; bevorzugt sendet zumindest eine der Komponenten Funkbake und Fahrzeuggerät den von ihr ermittelten Abstand an die andere der beiden Komponenten, welche den so empfangenen Abstand mit dem von ihr selbst ermittelten Abstand zu Überprüfungszwecken vergleicht.

Bevorzugt wird aus dem ermittelten Abstand anschließend die Fahrspur einer mehrspurigen Straße bestimmt, auf welcher sich das Fahrzeug bewegt. Dadurch können Mautvergehen bei parallel passierenden Fahrzeugen eindeutig einer Fahrspur und dem bzw. den darauf befindlichen Fahrzeug(en) zugeordnet werden.

Wenn die Fahrspurbestimmung im Fahrzeuggerät erfolgt, beispielsweise um eine fahrspurabhängige Maut zu berechnen, dann kann die Fahrspurinformation vom Fahrzeuggerät auch an die Funkbake gesendet werden und von dieser mit einem von ihr selbst ermittelten Abstand bzw. einer von ihr selbst ermittelten Fahrspur gegengeprüft werden. Die Abstandsbestimmung der Funkbake kann dabei sowohl auf herkömmliche Art und Weise, z.B. mittels herkömmlicher Entfernungsmesssensoren, oder auf die hier vorgestellte Art und Weise durchgeführt werden. Bevorzugt wird die Abstandsermittlung in der Funkbake mit geringerer Genauigkeit durchgeführt als im Fahrzeuggerät, besonders bevorzugt mit reduzierter Abtastrate, da dies für Überprüfungszwecke genügt. Auch der umgekehrte Fall ist möglich und kann sinnvoll sein, wenn beispielsweise die Abstandsermittlung in der Funkbake genauer ausgeführt werden kann als mit kostenoptimierten Komponenten im Fahrzeuggerät, die geringere Rechenleistung haben.

Die mit dem Verfahren der Erfindung ausgewertete Dopplerverschiebung kann an jeder beliebigen Frequenz des Signals gemessen werden, sei es eine Trägerfrequenz oder bevorzugt eine Modulationsfrequenz desselben. Unter Modulationsfrequenz wird eine Frequenz jeder beliebigen Modulation des OBU-Signals verstanden, sei es eine einfache Frequenz- oder Amplitudenmodulation, eine der Modulationsfrequenzen einer OFDM-Modulation, oder auch eine Puls- bzw. Burstmodulation, wie sie durch periodisches Übertragen von ganzen Datenblöcken auftritt; auch eine solche Blockwiederholungsrate kann als Modulationsfrequenz betrachtet werden, deren Dopplerfrequenzverschiebung gemessen werden kann.

Das Verfahren der Erfindung eignet sich für alle Arten von funkbakenbasierten Straßenmautsystemen. Besonders geeignet ist das Verfahren für CEN-DSRC- und WAVE- bzw. ITS-G5-Straßenmautsysteme, bei welchen zum Aussenden des Signals ein CEN-DSRC-, WAVE- oder ITS-G5-Sender des Fahrzeuggerätes oder der Funkbake verwendet wird. Andere Ausführungen in RFID-Technologie, aber auch jegliche zellularen (z.B. GSM, UMTS, LTE) und Nahbereichs-Funktechnologien (z.B. Bluetooth, WLAN), sind ebenfalls möglich.

In einem zweiten Aspekt schafft die Erfindung auch eine Funkbake für ein Straßenmautsystem zum Ermitteln des Abstandes eines diese passierenden Fahrzeuges, welches mit einem Fahrzeuggerät ausgestattet ist, das ein Signal mit einem bekannten zeitlichen Verlauf seiner Frequenz aussendet, welche Funkbake sich auszeichnet durch:

einen Empfänger, welcher zum Empfangen des Signals eines passierenden Fahrzeuges ausgebildet ist;
einen an den Empfänger angeschlossenen Speicher, der zum Aufzeichnen des zeitlichen Verlaufes der Frequenz des empfangenen Signals relativ zum bekannten zeitlichen Verlauf ausgebildet ist;
einen an den Speicher angeschlossenen Detektor, welcher zum Detektieren einer einen ersten Schwellwert überschreitenden Änderung im aufgezeichneten Frequenzverlauf ausgebildet ist;
eine an den Detektor und den Speicher angeschlossene erste Auswerteeinrichtung, die zum Aufsuchen zweier zeitlich vor und nach der detektierten Änderung liegender Fernbereiche im Frequenzverlauf ausgebildet ist, welche eine Frequenzänderung unter einem zweiten Schwellwert zeigen;
einen an den Speicher und die erste Auswerteeinrichtung angeschlossenen Skalierer, der dazu ausgebildet ist, den aufgezeichneten Frequenzverlauf so zu skalieren, dass die Fernbereiche vorgegebene Werte annehmen; und
eine dem Skalierer nachgeschaltete zweite Auswerteeinrichtung, die zum Ermitteln des Abstands aus dem skalierten Frequenzverlauf ausgebildet ist.

Die Funkbake kann sowohl ortsfest an einer Straße angeordnet als auch mobil z.B. auf einem Kontrollfahrzeug des Straßenmautsystems montiert sein.

In einem dritten Aspekt schafft die Erfindung eine Anlage zur Bestimmung der Fahrspur eines mit einem Fahrzeuggerät passierenden Fahrzeuges auf einer mehrspurigen Straße, umfassend

zumindest zwei Funkbaken der hier vorgestellten Art, welche in einer Normalebene zur Straßenlängsrichtung etwa auf gleicher Höhe mit gegenseitigem Abstand liegen und jeweils ihren Abstand zum Fahrzeuggerät ermitteln, und
eine an die Funkbaken angeschlossene dritte Auswerteeinrichtung, welche deren ermittelte Abstände empfängt, unter diesen den kleinsten Abstand auswählt und daraus die Fahrspur ermittelt.

Die erfindungsgemäße Anlage beruht auf der Erkenntnis, dass die Genauigkeit des mittels Doppler-Sprunganalyse bestimmten Abstands - sofern dieser nicht so gering wird, dass die zeitliche Auflösung für die korrekte Erfassung des Frequenzverlaufs im interessierenden Sprungbereich nicht mehr ausreicht - für geringere Abständen höher ist als für größere Abstände.

Wenn mobile, auf einem Kontrollfahrzeug montierte Funkbaken verwendet werden, können die beiden Funkbaken der Anlage bevorzugt auf jeweils einer Seite des Kontrollfahrzeugs montiert sein, so dass sie gegenseitigen Abstand haben und beidseits des Kontrollfahrzeugs passierende Fahrzeuge eindeutig anhand ihrer unterschiedlichen Abstände zu den beiden Funkbaken identifizieren können.

In einem vierten Aspekt schafft die Erfindung eine Anlage zur Bestimmung der Fahrspur eines mit einem Fahrzeuggerät passierenden Fahrzeuges auf einer mehrspurigen Straße, umfassend

zumindest zwei Funkbaken der hier vorgestellten Art, welche in einer Normalebene zur Straßenlängsrichtung mit gegenseitigem Abstand liegen und jeweils ihren Abstand zum Fahrzeuggerät ermitteln, und

eine an die Funkbaken angeschlossene dritte Auswerteeinrichtung, welche deren ermittelte Abstände empfängt und aus der Lage der Funkbaken, ihrem gegenseitigen Abstand und den ermittelten Abständen durch Triangulation die Fahrspur ermittelt.

Mit einer erfindungsgemäßen Anlage dieser Art können beispielsweise auch oberhalb der Straße angeordnete Funkbaken, z.B. an einem die Straße überspannenden Brückenträger, eingesetzt werden, aus deren ermittelten Abständen durch Triangulation die jeweilige Fahrspur bestimmt werden kann.

In einem fünften Aspekt schafft die Erfindung ein Fahrzeuggerät (OBU) für ein Straßenmautsystem zum Ermitteln des Abstandes zu einer Funkbake des Straßenmautsystems, die ein Signal mit einem bekannten zeitlichen Verlauf seiner Frequenz aussendet, welches sich auszeichnet durch einen Empfänger, der zum Empfangen des Signals einer Funkbake ausgebildet ist;

einen an den Empfänger angeschlossenen Speicher, der zum Aufzeichnen des zeitlichen Verlaufes der Frequenz des empfangenen Signals relativ zum bekannten zeitlichen Verlauf ausgebildet ist;

einen an den Speicher angeschlossenen Detektor, welcher zum Detektieren einer einen ersten Schwellwert überschreitenden Änderung im aufgezeichneten Frequenzverlauf ausgebildet ist;

eine an den Detektor und den Speicher angeschlossene erste Auswerteeinrichtung, die zum Aufsuchen zweier zeitlich vor und nach der detektierten Änderung liegender Fernbereiche im Frequenzverlauf ausgebildet ist, welche eine Frequenzänderung unter einem zweiten Schwellwert zeigen;

einen an den Speicher und die erste Auswerteeinrichtung angeschlossenen Skalierer, der dazu ausgebildet ist, den aufgezeichneten Frequenzverlauf so zu skalieren, dass die Fernbereiche vorgegebene Werte annehmen; und

eine dem Skalierer nachgeschaltete zweite Auswerteeinrichtung, die zum Ermitteln des Abstands aus dem skalierten Frequenzverlauf ausgebildet ist.

Hinsichtlich weiterer Merkmale und Vorteile der erfindungsgemäßen Funkbake, Anlage und des erfindungsgemäßen Fahrzeuggeräts wird auf die obigen Ausführungen zum Verfahren verwiesen.

Die Erfindung wird nachstehend anhand von bevorzugten Ausführungsbeispielen unter Bezugnahme auf die begleitenden Zeichnungen näher erläutert, in denen zeigen:

Fig. 1 eine Funkbake an einer mehrspurigen Straße und die geometrischen Verhältnisse bei der Passage zweier Fahrzeuge schematisch in der Draufsicht;

Fig. 2 die Frequenzverläufe der Signale zweier Fahrzeuge bei der Passage der Funkbake;

Fig. 3 die Frequenzverläufe von Fig. 2 nach ihrer Skalierung;

Fig. 4 die Differentiale der skalierten Frequenzverläufe von Fig. 3;

Fig. 5 ein Blockschaltbild der Funkbake bzw. des Fahrzeuggeräts der Erfindung;

die Fig. 6 und 7 alternative Auswertungsverfahren für die skalierten Frequenzverläufe von Fig. 3;

die Fig. 8a und 8b Varianten der zweiten Auswerteeinrichtung der Funkbake bzw. des Fahrzeuggeräts von Fig. 5 zur Implementierung der Verfahren der Fig. 6 und 7;

Fig. 9 eine Variante der Erfindung auf Basis intermittierend ausgesandter Signale und entsprechend intermittierender Frequenzverläufe;

die Fig. 10 bis 13 verschiedene Ausführungsformen von erfindungsgemäßen Anlagen zur Fahrspurbestimmung an mehrspurigen Straßen unter Verwendung mehrerer Funkbaken der Erfindung einmal in der Draufsicht (Fig. 10 und 11) und einmal in einer Seitenansicht in Straßenrichtung gesehen (Fig. 12 und 13);

Fig. 14 an eine an einem Kontrollfahrzeug montierte Funkbake gemäß der Erfindung; und

Fig. 15 eine an einem Kontrollfahrzeug montierte Anlage mit zwei Funkbaken gemäß der Erfindung.

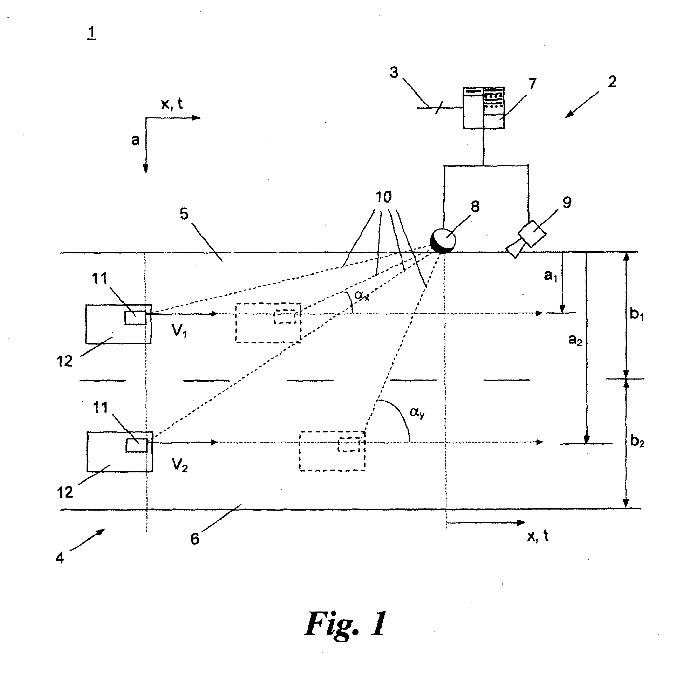

In Fig. 1 ist ein Straßenmautsystem 1 gezeigt, das eine Vielzahl geografisch verteilter Funkbaken 2 umfasst (nur eine stellvertretend gezeigt), die über Datenverbindungen 3 mit einer (nicht gezeigten) Zentrale des Straßenmautsystems 1 in Verbindung stehen. Die Funkbaken 2 sind jeweils an einer Straße 4 postiert, welche mehrere Fahrbahnen bzw. Fahrspuren 5, 6 umfassen kann.

Die Funkbake 2 setzt sich beispielsweise aus einem lokalen Rechner 7, einem (Sende-)Empfänger 8 und einer Kamera 9 zusammen, die zur Ahndung von Mautvergehen - vom Rechner 7 angesteuert - Bilder der Straße 4 mit ihren Fahrspuren 5, 6 aufnehmen kann.

Der (Sende-)Empfänger 8 dient zur Durchführung von Funkkommunikationen 10 mit Fahrzeuggeräten bzw. OBUs (onboard units) 11, die von Fahrzeugen 12 mitgeführt werden, welche auf den Fahrspuren 5, 6 die Funkbake 2 passieren. Die Funkkommunikationen 10 sind in der Regel bidirektionale Datenpaketverbindungen. In einer ersten Ausführungsform der Erfindung ist eine Analyse der von den OBUs 11 zum (Sende-)Empfänger 8 der Funkbake 2 gesandten Signale ausreichend, so dass im Weiteren nur davon gesprochen wird, dass die OBU 11 Signale 10 an den Empfänger 8 der Funkbake 2 sendet; in später erörterten Ausführungsformen werden auch Signale 10 in der umgekehrten Richtung analysiert.

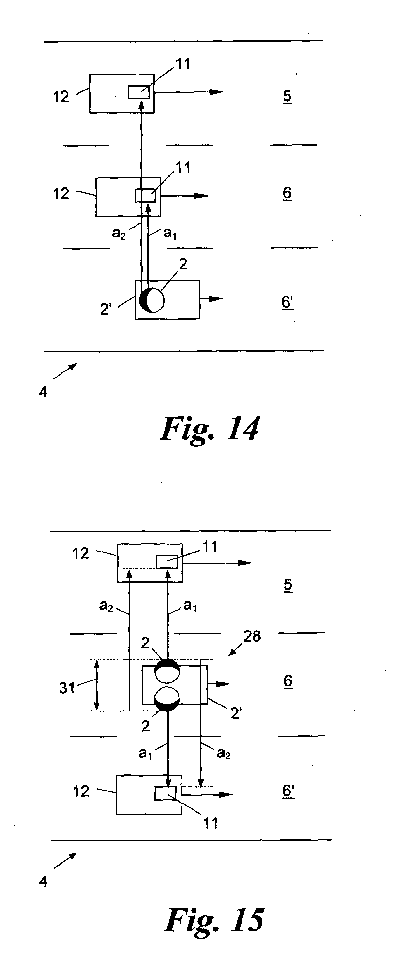

Es versteht sich, dass die Funkbake 2 nicht notwendigerweise ortsfest sein muss, sondern auch selbst von einem Fahrzeug mitgeführt sein kann, beispielsweise von einem Kontrollfahrzeug 2', welches Fahrzeuge 12 mit OBUs 11 im fließenden Verkehr passiert bzw. von diesen passiert wird, siehe die weiter unten erörterten Ausführungsformen der Fig. 14 und 15.

Die Fahrzeuge 12 mit den OBUs 11 bewegen sich auf den Fahrspuren 5, 6 mit unterschiedlichen Geschwindigkeiten $v_1$, $v_2$ in unterschiedlichen Passage bzw. Normalabständen $a_1$, $a_2$ an der Funkbake 2, genauer an ihrem Empfänger 8, vorbei. Die von den OBUs 11 ausgesandten Signale 10 unterliegen dabei jeweils frequenzabhängigen Dopplerverschiebungen gemäß der bekannten Formel

$$f_D = \frac{f_S}{1 - \dfrac{v}{c}} \tag{1}$$

mit

$f_S$ ... Sendefrequenz des Signals 10 der OBU 11;
$f_D$ ... dopplerverschobene Empfangsfrequenz des Signals 10 in der Funkbake 2, wenn sich die OBU 11 darauf frontal zubewegen würde;
v ... Geschwindigkeit der OBU 11; und
c ... Lichtgeschwindigkeit.

Wenn sich die OBU 11 in einem Abstand a an die Funkbake 2 vorbeibewegt, kann Gleichung (1) mittels geometrischer Überlegungen geschrieben werden als

$$f_B \equiv \cos\left[\arctan\left(\frac{a}{x}\right)\right] f_D \tag{2}$$

mit

a ... Vertikalabstand der OBU 11 zur Funkbake 2 in dem Koordinatensystem von Fig. 1;
x ... Horizontalabstand der OBU 11 zur Funkbake 2 in dem Koordinatensystem von Fig. 1; unter der Annahme einer konstanten Geschwindigkeit v bzw. $v_1$, $v_2$ der OBUs 11 entspricht der Horizontalabstand auch gleichzeitig der Zeit t; und
$f_B$ ... dopplerverschobene Empfangsfrequenz des Signals 10 in der Funkbake 2, wenn sich die OBU 11 mit dem Abstand a daran vorbeibewegt.

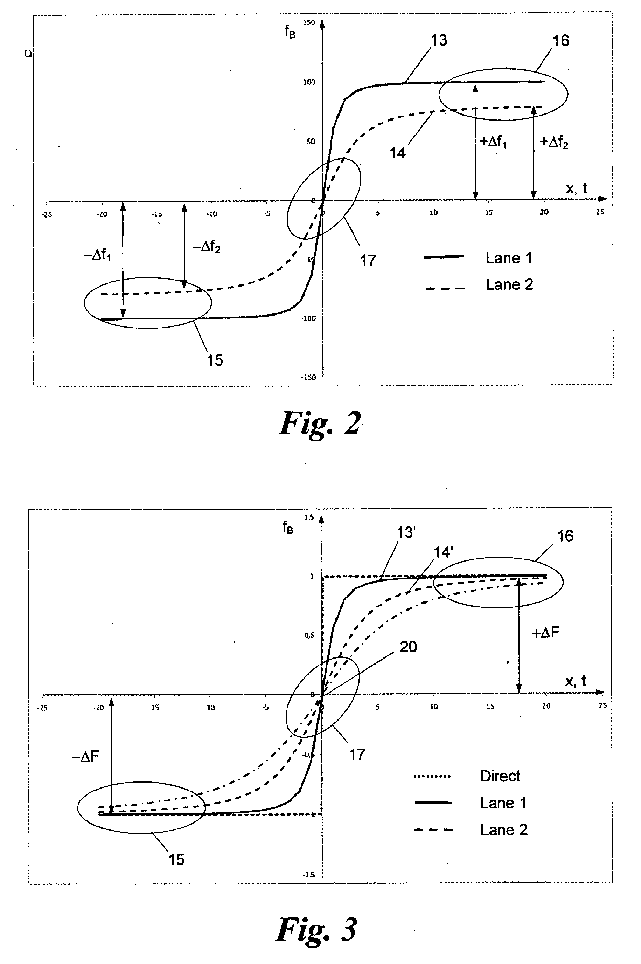

Fig. 2 zeigt zwei beispielhafte Verläufe der Empfangsfrequenz $f_B$ über dem Horizontalabstand x bzw. der Zeit t. Die durchgezogene Linie 13 zeigt den Empfangsfrequenzverlauf für die OBU 11 auf der Fahrspur 5 und die strichlierte Linie 14 jene für die OBU 11 auf der Fahrspur 6. Wie ersichtlich ist die dopplerbedingte Frequenzverschiebung $\pm\Delta f_1$, $\pm\Delta f_2$ in "Fernbereichen" 15, 16 der Frequenzverläufe 13, 14 weit vor und nach einem Bereich 17 maximaler Änderung $f_B' = \partial f_B/\partial t$ gering, d.h. in den Fernbereichen 15, 16 liegt die Frequenzänderung $f_B'$ unter einem Signifikanzschwellwert $\varepsilon$.

In den Fernbereichen 15, 16 (und natürlich auch weiter außerhalb derselben) hängt das Ausmaß der Dopplerverschiebung $\pm\Delta f$ somit kaum mehr vom Passageabstand a sondern fast ausschließlich von der Geschwindigkeit v ab. Der Effekt der Fahrzeuggeschwindigkeit v auf die Frequenzverläufe 13, 14 kann daher eliminiert werden, indem diese so skaliert werden, dass sie in den Fernbereichen 15, 16 jeweils denselben Wert annehmen, z.B. einen vorgegebenen Wert $\pm\Delta F$.

Fig. 3 zeigt das Ergebnis einer solchen Skalierung, bei der die aufgezeichneten Frequenzverläufe 13, 14 so skaliert ("normiert") wurden, dass sie in den Fernbereichen 15, 16 die vorgegebenen Werte $\pm\Delta F$ annehmen.

Die skalierten Frequenzverläufe 13', 14' hängen somit nur mehr vom Verhältnis a/x, d.h. des Passageabstands a zum Horizontalabstand x bzw. zur Zeit t, ab gemäß

$$f_B \equiv \cos\left[\arctan\left(\frac{a}{x}\right)\right] f_s \qquad\qquad (3)$$

Wie aus Fig. 3 ersichtlich, unterscheiden sich die skalierten Frequenzverläufe 13', 14' besonders deutlich in ihrer Steigung $f_B$' = $\partial f_B/\partial t$ am Ort x = t = 0, an dem ihre Kurve gleichzeitig einen Wendepunkt 20 zeigt: Je größer der Passageabstand a, desto "verschliffener" ist der skalierte Frequenzverlauf 13', 14', d.h. desto geringer ist die Steigung $f_B$' am Wendepunkt 20. Der Passageabstand a ist somit umgekehrt proportional zur Steigung $f_B$', d.h.

$$\frac{1}{a} \equiv \lim_{x \to 0} f_B'(x) \qquad\qquad (4)$$

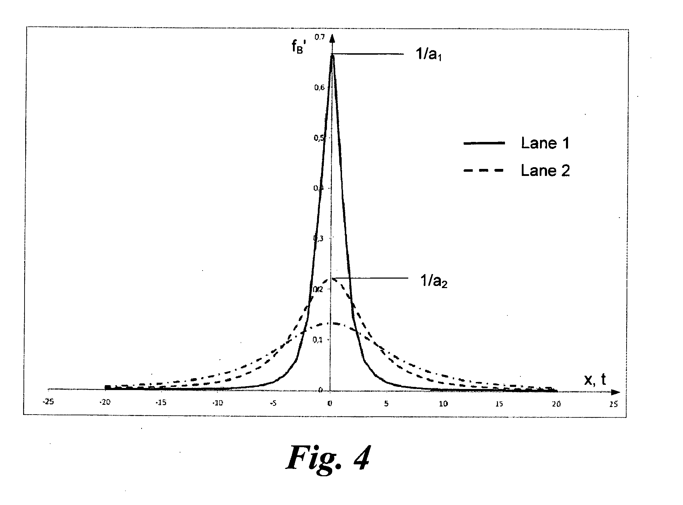

Die Steigung $f_B$' im Wendepunkt 20 lässt sich durch Differenzieren der skalierten Frequenzverläufe 13', 14' ermitteln, und das Ergebnis der Differentiation ist in Fig. 4 gezeigt.

Aus den so ermittelten Passageabständen $a_1$, $a_2$ kann anschließend - in Kenntnis der Spurbreite $b_1$, $b_2$ der Fahrspuren 5, 6 - die jeweilige Fahrspur 5, 6 ermittelt werden, auf der sich die OBU 11 bei der Aussendung ihres Signals 10 befand. Oft reicht auch ein einfacher relativer Vergleich der Passageabstände $a_1$, $a_2$ aus, um die örtliche Abfolge der Fahrzeuge zu bestimmen.

Bislang wurde davon ausgegangen, daß die Sendefrequenz $f_S$ des Signals 10 der OBU 11 konstant ist, d.h. ihr eigener zeitlicher Verlauf ein konstanter Verlauf ist. Es ist jedoch auch möglich, daß die OBU 11 ein Signal 10 mit einem zeitlich nichtkonstanten Sendefrequenzverlauf aussendet, beispielsweise im Falle von Frequency-Hopping-Funckommunikationen, bei denen die Sendefrequenz $f_S$ ständig - nach einem vorgegebenen bzw. bekannten Muster - wechselt. Die aufgezeichneten Empfangsfrequenzverläufe 13, 14 werden relativ zu dem vorbekannten zeitlichen Verlauf der Sendefrequenz $f_S$ der OBU 11 - sei er konstant oder wechselnd - aufgezeichnet, d.h. auf diesen referenziert bzw. normiert, so daß der Effekt von bekannten Sendefrequenzänderungen der OBU 11 kompensiert werden kann.

Das Verfahren zum Bestimmen des Passageabstands a der die Funkbake 2 passierenden OBUs 11 gestaltet sich daher wie folgt:

Zunächst wird der Frequenzverlauf 13, 14 des Signals 10 der OBU 11 - gegebenenfalls relativ auf einen vorbekannten zeitlichen Verlauf der Sendefrequenz $f_S$ bezogen - über der Zeit t (= x) aufgezeichnet. Anschließend wird im Frequenzverlauf 13, 14 jener Bereich 17 näherungsweise bestimmt, zu dem überhaupt eine signifikante Änderung auftritt, d.h. $\partial f_B/\partial t$ einen vorgegebenen Detektionsschwellwert $\sigma$ ("erster Schwellwert") übersteigt. Dies dient dazu, einen zeitlichen Anhaltspunkt für das Aufsuchen der beiden Fernbereiche 15, 16 zu erhalten, welche vor und nach der Änderung 17 und von dieser so weit entfernt liegen müssen, dass in ihnen keine signifikante Frequenzänderung $\partial f_B/\partial t$ mehr auftritt, d.h. diese unterhalb eines vorgegebenen Signifikanzschwellwerts $\varepsilon$ ("zweiter Schwellwert") liegt.

In Kenntnis der Fernbereiche 17, 18 und der in diesen auftretenden Dopplerverschiebungen $\pm\Delta f_1$, $\pm\Delta f_2$ (welche, weil ihre Änderung den Signifikanzschwellwert $\varepsilon$ nicht überschreitet, auch als quasi-konstant betrachtet werden können), können die Frequenzverläufe 13, 14 nun so skaliert werden, dass sie in ihren Fernbereichen 15, 16 jeweils denselben vorgegebenen Wert $\pm\Delta F$ annehmen.

Anschließend wird der Wendepunkt 20 in den skalierten Frequenzverläufen 13', 14' gesucht. Dazu wird jener Ort x bzw. jene Zeit t in den Frequenzverläufen gesucht, zu dem bzw. zu der die Empfangsfrequenz $f_B$ entweder den Frequenzmittelwert (die "Mitte") zwischen den "quasi-konstanten" Fernbereichen 15, 16 oder - wenn die Nennfrequenz des Signals 10 der ruhenden OBU 11 bekannt ist - diese Nennfrequenz einnimmt. Auf beide Arten kann der Wendepunkt 20 bestimmt werden, u.zw. sowohl vor der Skalierung in den Frequenzverläufen 13, 14 als auch nach der Skalierung in den skalierten Frequenzverläufen 13', 14'.

Nach Bestimmung des Wendepunkts 20 kann nun die Steigung $f_B$'(x = t = 0) der skalierten Frequenzverläufe 13', 14' im Wendepunkt 20 bestimmt (siehe Fig. 4) und daraus der Passageabstand a bzw. $a_1$, $a_2$) ermittelt werden, wie oben erläutert.

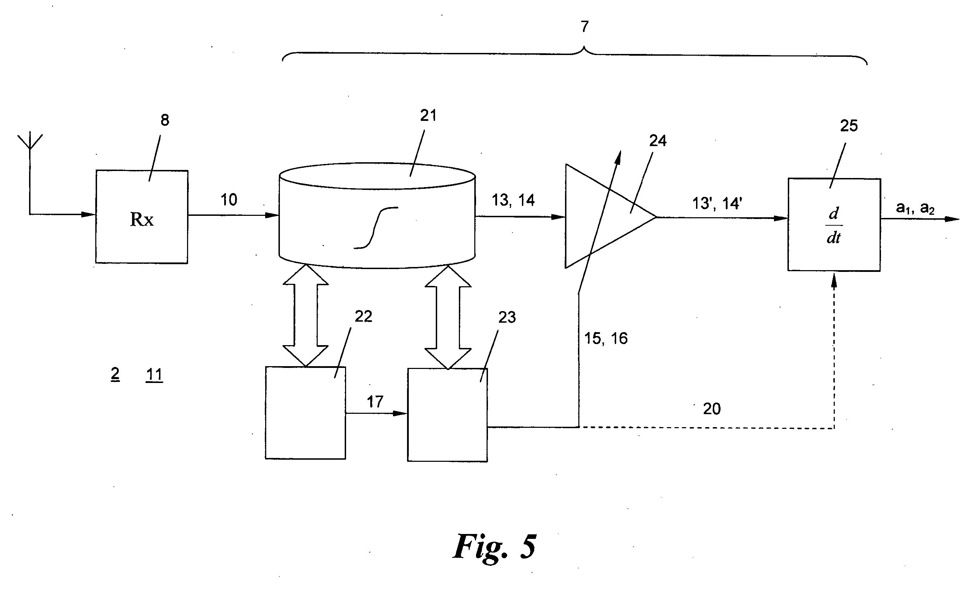

Fig. 5 zeigt eine beispielhafte Hardwarerealisierung der Funkbake 2 zur Durchführung des geschilderten Verfahrens. Im Anschluss an den Empfänger 8 verfügt die Funkbake 2 über einen Speicher 21, in dem die zeitlichen Frequenzverläufe 13, 14 der empfangenen Signale 10 aufgezeichnet werden. Ein an den Speicher 21 angeschlossener Detektor 22 detektiert den Änderungsbereich 17 ($\partial f_B/\partial t > \sigma$) und führt diese Information 17 einer ersten Auswerteeinrichtung 23 zu. Die erste Auswerteeinrichtung 23 ermittelt daraus die Fernbereiche 15, 16 der Frequenzverläufe 13, 14

mit $\partial f_B/\partial t < \varepsilon$ und steuert mit dieser Information 15, 16 einen Skalierer 24 an, der die Frequenzverläufe 13, 14 zu skalierten Frequenzverläufen 13', 14' skaliert. Letztere werden einer zweiten Auswerteeinrichtung 25 in Form eines Differenzierers zugeführt, welcher die Steigung $f_B$' (0) = $\partial f_B/\partial t$ am Ort x = t = 0 ihres Wendepunkts 20 berechnet, um daraus die Passageabstände $a_1$, $a_2$ zu ermitteln.

Die Komponenten 21 - 25 können beispielsweise durch den lokalen Rechner 8 der Funkbake 2 implementiert werden.

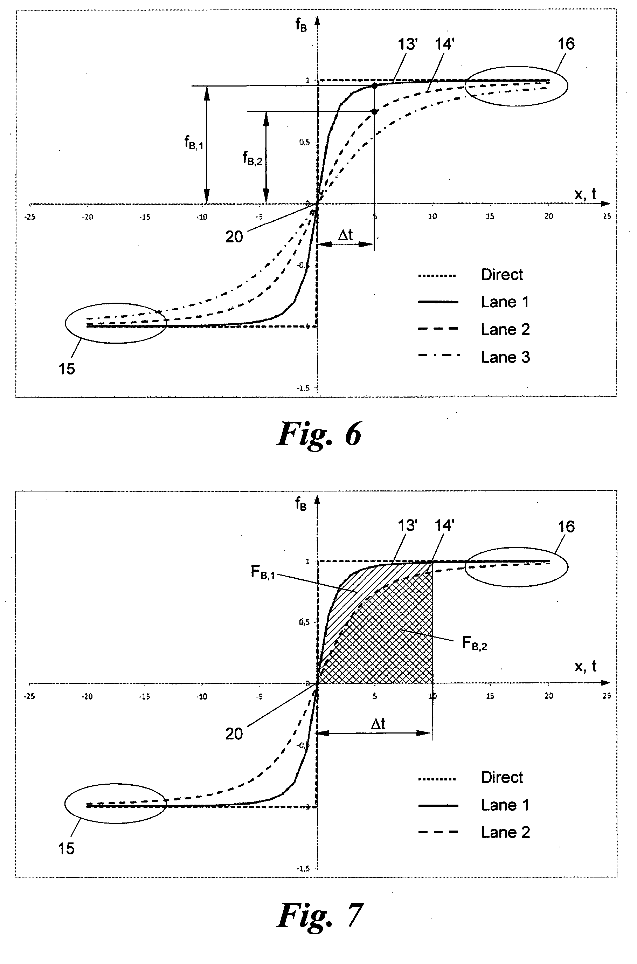

Die Fig. 6 und 7 zeigen alternative Ausführungsformen des soweit geschilderten Verfahrens, welche sich in dem Schritt des Ermittelns des Passageabstands a aus dem skalierten Frequenzverlauf 13', 14' unterscheiden: Wie oben erläutert, ist die Auswertung der Steigung $f_B$' des skalierten Frequenzverlaufs 13', 14' im Wendepunkt 20 zwar ein besonders aussagekräftiges Kriterium für den Passageabstand a, doch können stattdessen auch andere signalanalytische Parameter des skalierten Frequenzverlaufs 13', 14' ausgewertet werden.

Fig. 6 zeigt eine erste Variante, bei welcher die Frequenzwerte $f_{B,1}$ bzw. $f_{B,2}$ der skalierten Frequenzverläufe 13', 14' an einem *zwischen* dem Wendepunkt 20 (x = t = 0) und einem der Fernbereiche 15, 16 liegenden Ort $\Delta x = \Delta t$ ausgewertet werden, d.h. $f_{B,1}(\Delta t)$ bzw. $f_{B,2}(\Delta t)$. Der Ort $\Delta x = \Delta t$ kann beispielsweise auf halbem Weg zwischen dem Wendepunkt 20 und einem der Fernbereiche 15 oder 16 gewählt werden.

Aus dem entsprechenden Frequenzwert $f_{B,1}(\Delta t)$ bzw. $f_{B,2}(\Delta t)$ kann dann auf den jeweiligen Passageabstand $a_1$, $a_2$ geschlossen werden: Je größer der Frequenzwert $f_B$ am vorgegebenen Ort $\Delta t$, desto kleiner ist der Passageabstand a. In Testreihen kann der zu einem bestimmten Passageabstand a zugehörige Frequenzwert $f_B$ des skalierten Frequenzverlaufs 13', 14' ermittelt und z.B. in einer Datenbank oder Tabelle gespeichert werden, auf welche dann bei der Messung zugegriffen wird, um aus einem Frequenzwert $f_B$ den jeweiligen Passageabstand a zu ermitteln.

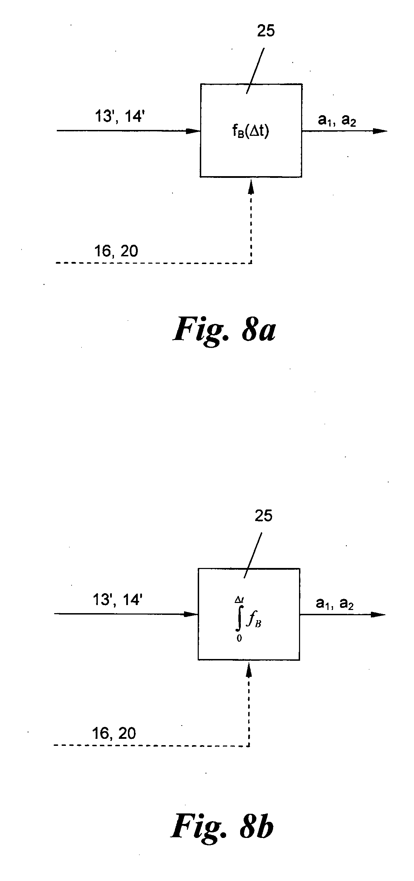

Fig. 8a zeigt eine hiefür abgewandelte zweite Auswerteeinrichtung 25 der Funkbake 2 von Fig. 5. Die zweite Auswerteeinrichtung 25 ist hier nicht als Differenzierer, sondern als Abtastglied ausgebildet, welches einfach den Funktionswert $f_B$ am vorgegebenen Ort $\Delta t$ des skalierten Frequenzverlaufs 13', 14' entnimmt, wobei der Ort $\Delta t$ zwischen dem Wendepunkt 20 und einem Fernbereich, z.B. dem Fernbereich 16, gewählt wird.

Fig. 7 zeigt noch eine weitere Möglichkeit der Auswertung der skalierten Frequenzverläufe 13', 14' durch Berechnen von Integralen derselben. Die Integrale der skalierten Frequenzverläufe 13', 14' vom Wendepunkt 20 bis zu einem vorgegebenen Ort $\Delta x = \Delta t$ entsprechen den in Fig. 7 schraffiert dargestellten Flächen $F_{B,1}$ für den skalierten Frequenzverlauf 13' bzw. $F_{B,2}$ für den skalierten Frequenzverlauf 14'. Wie ersichtlich, sind die Integrale $f_B(\Delta t)$ je nach Passageabstand a unterschiedlich. Je kleiner der Passageabstand a, desto größer ist das Integral bzw. die Fläche $F_B$. Wieder können durch Testreihen für verschiedene Passageabstände a die jeweils dazu auftretenden Flächen bzw. Integrale $F_B$ ermittelt und in einer Tabelle oder Datenbank vorgespeichert werden, sodass später im Messbetrieb aus einem gemessenen Integralwert $F_B$ der jeweils zugehörige Passageabstand a ermittelt werden kann.

Die Integrationsgrenzen der Integrale $F_B$ können dabei jeweils vom Wendepunkt 20 (x = t = 0) bis zu einem Punkt $\Delta x = \Delta t$ zwischen dem Wendepunkt 20 und einem der Fernbereiche 15, 16 gewählt werden, oder auch vom Wendepunkt 20 bis hin zu einem Fernbereich 15, 16. Als untere Integrationsgrenze kann anstelle des Wendepunkts 20 auch ein davon beabstandeter Punkt gewählt werden, der vor einem der Fernbereiche 15, 16 liegt.

Fig. 8b zeigt eine beispielhafte Realisierung einer zweiten Auswerteeinrichtung 25 für die Funkbake 2 von Fig. 5, welche durch ein Integrierglied gebildet ist. Das Integrierglied 25 führt die Integration der skalierten Frequenzbereiche 13', 14' zwischen den genannten Integrationsgrenzen aus, z.B. dem Wendepunkt 20 und einem Fernbereich 16, um daraus - beispielsweise anhand einer Datenbanktabelle - den jeweiligen Passageabstand $a_1$, $a_2$ zu ermitteln.

In einer weiteren Ausführungsform der Erfindung kann das gesamte bislang beschriebene Verfahren zur Bestimmung des Abstands a auch in der OBU 11 durchgeführt werden, u.zw. auf Grundlage einer Auswertung von Signalen 10, die sie von der Funkbake 2 empfängt. Die Fig. 5 und 8 zeigen demgemäß gleichzeitig eine beispielhafte Hardwarerealisierung einer OBU 11 zur Durchführung dieser Verfahrensvariante, und die Komponenten 7, 8, 21 - 25 sind dementsprechend interne Komponenten einer OBU 11.

Auch ist es möglich, dass sowohl die Funkbake 2 als auch die OBU 11 den Abstand zur jeweils anderen Komponente 11 bzw. 2 nach dem geschilderten Verfahren bestimmen. Die Empfänger 8 von Bake 2 und OBU 11 können dann als Sendeempfänger ausgeführt sein und die Funkbake 2 kann optional der OBU 11 den von ihr ermittelten Abstand a und/oder die OBU 11 optional der Funkbake 2 den von ihr ermittelten Abstand a zur Gegenprüfung mit dem jeweils dort ermittelten Abstand a senden.

In gleicher Weise können Funkbake 2 und OBU 11 auch eine auf Grundlage des ermittelten Abstands a bestimmte Information über die jeweilige Fahrspur 5, 6, auf der sich das Fahrzeug 12 mit der OBU 11 befindet, austauschen bzw. mitteilen. Die Information über die Fahrspur 5, 6 ist beispielsweise nützlich, wenn eine fahrspurabhängige Maut eingehoben oder eine ungerechtfertigte Benutzung einer Fahrspur geahndet werden soll: Sog. "HOT-Lanes" (high occupancy toll lanes) sind beispielsweise für Fahrzeuge mit einer bestimmten Mindestanzahl von Insassen (sog. high occupancy vehicles, HOVs) reserviert, können jedoch unter Zahlung einer z.B. insassenzahlabhängigen Maut (HOT-Gebühr) auch von Fahrzeugen mit weniger Insassen benützt werden. Wenn die OBU 11 die Fahrspur 5, 6 als Berechnungsgrundlage für eine HOT-Gebühr selbst ermittelt und der Funkbake 2 mitteilt, kann diese mittels ihrer eigenen Abstandmessung die korrekte Berechnung der HOT-Gebühr nachprüfen.

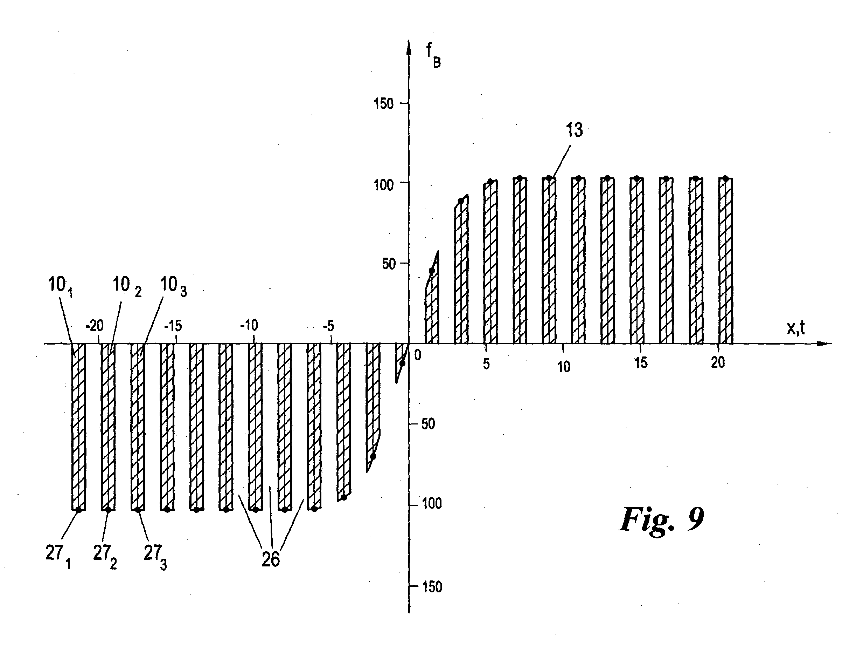

Fig. 9 zeigt eine weitere Variante der geschilderten Verfahren, Funkbaken und OBUs, bei welchen das Signal 10 nicht kontinuierlich bzw. dauernd während der gesamten hier interessierenden Zeitspanne der Passage vorliegt, sondern - aufgrund einer Aufteilung der Funkkommunikation in Datenpakete $10_1$, $10_2$, $10_3$ usw., allgemein $10_i$, - intermittierend vorliegt, d.h. von Lücken 26 unterbrochen ist. Die Empfangsfrequenz $f_B$ des Signals 10 im jeweiligen empfangenden Kommunikationspartner, sei es Funkbake 2 oder OBU 11, kann damit nur zu diskreten Zeitpunkten aufgezeichnet werden, so dass die Frequenzverläufe 13, 14 in Abtastwerte $27_1$, $27_2$, $27_3$ usw., allgemein $27_i$, zeitdiskretisiert (zeitlich abgetastet) sind.

Es versteht sich, dass das Differential $f_B'$ einer solchen diskreten Folge von Abtastwerten $27_i$ rechentechnisch sehr einfach aus den Steigungen der Verbindungslinien zwischen jeweils zwei aufeinanderfolgenden Abtastwerten ermittelt werden kann, wie in der Technik bekannt, und dementsprechend die Steigung $f_B'$ im Wendepunkt 20 näherungsweise der Steigung zwischen den zwei den Wendepunkt 20 einrahmenden Abtastwerten 27' entspricht, was auch den Aufbau des Differentierers 25 entsprechend vereinfacht.

Da auch die "ununterbrochene" Ausführungsform der Fig. 1 bis 4 bei Implementierung mit einem herkömmlich getakteten Prozessorsystem z.B. gemäß den Fig. 5 und 8 ein zeitdiskretes System mit einer Abtastrate entsprechend den Abtastraten der eingesetzten Analog/Digital-Wandler und Taktraten der eingesetzten Prozessoren darstellt, bedeutet dies gegenüber den vorgenannten Ausführungsformen lediglich eine Reduzierung der Genauigkeit im Ausmaß einer auf die Zeitpunkte $27_i$ reduzierten Abtastrate. Werden die Zeitpunkte $27_i$ entsprechend dicht gesetzt, ergibt sich eine entsprechend hohe Abtastrate für die zeitdiskretisierten Frequenzverläufe 13, 14, welche nur eine geringfügige Genauigkeitseinbuße bei der Bestimmung des Abstands a zur Folge hat.

Die intermittierenden Signale 10 der Ausführungsform von Fig. 9 können beispielsweise durch eine Folge von Datenpaketen $10_i$ gebildet werden, welche zwischen Funkbake 2 und OBU 11 nach dem CEN-DSRC- oder WAVE- bzw. ITS-G5-Standard ausgetauscht werden. Nach dem CEN-DSRC-Standard sendet eine Funkbake 2 beispielsweise periodisch sog. "Beacon Service Table"-Nachrichten (BST), um die in ihren Funkabdeckungsbereich eintretenden OBUs 11 zu einer Antwort aufzufordern. In ähnlicher Weise kann eine Funkbake 2 nach dem WAVE- bzw. ITS-G5-Standard wiederholt sog. "Wave Service Announcement"-Nachrichten (WSA) ausstrahlen, die von passierenden OBUs 11 aufgefangen werden können. Jede BST- bzw. WSA-Nachricht der Funkbake 2 bildet dann ein Datenpaket $10_i$ einer Folge, die von der OBU 11 als Signal 10 in der beschriebenen Art und Weise ausgewertet werden kann.

Umgekehrt kann eine Funkbake 2 wiederholte Datensendungen einer OBU 11 als Signal 10 auswerten. Da nach den CEN-DSRC- und WAVE- bzw. ITS-G5-Standards OBUs 11 in der Regel nur auf Aufforderung durch eine Funkbake 2 antworten, sendet dazu die Funkbake 2 bevorzugt ein periodisch wiederholtes Abfragesignal aus, welches jeweils eine Antwort einer OBU 11 provoziert, z.B. eine periodische Folge von BST- oder WSA-Nachrichten oder von sog. "Echo-Nachrichten", welche von einer OBU 11 wiederholt werden. Auf diese Weise können OBUs 11 zur wiederholten Aussendung von Datenpaketen $10_i$ veranlasst werden, welche in der Funkbake 2 in der geschilderten Art und Weise ausgewertet werden können, um den Abstand a zu ermitteln.

In einer beispielhaften Ausführungsform mit einer Funkbake 2, deren Funkabdeckungsbereich in Fahrtrichtung der Straße 4 gesehen etwa 20 m vor und 20 m hinter die Bake reicht, d.h. ca. 40 m lang ist, und einem zeitlichen Abstand der Datenpakete $10_i$ von ca. 10 ms entsprechend einer Datenpaketsenderate von ca. 100 Hz befindet sich eine OBU 11 bei einer Fahrgeschwindigkeit von 10 kmh ca. 13 Sekunden im Funkabdeckungsbereich der Funkbake 2, so dass 1300 Datenpakete $10_i$ gesendet und damit 1300 Abtastwerte $27_i$ der Frequenzverläufe 13, 14 angefertigt werden können. Bei einer Fahrtgeschwindigkeit von ca. 130 kmh können immer noch ca. 100 Abtastwerte $27_i$ angefertigt werden, was eine ausreichende zeitliche Auflösung der Frequenzverläufe 13, 14 und damit eine ausreichende Genauigkeit der Bestimmung des Abstands a ergibt.

Wenn sowohl die Funkbake 2 als auch die OBU 11 jeweils den Abstand a bestimmen und die OBU 11 den von ihr ermittelten Abstand a an die Funkbake 2 zur Gegenprüfung sendet, können auch unterschiedliche Abtastraten für die Frequenzverläufe 13, 14 in der Bake 2 einerseits und der OBU 11 andererseits vorgesehen werden, insbesondere eine reduzierte Abtastrate auf Seiten der Bake 2, weil dies für die Validierung des von der OBU 11 mitgeteilten Abstands a genügt.

Eine weitere Möglichkeit ist es, die Wiederholungsrate $f_A$ der Datenpakete 10' adaptiv an die Entfernung

$$e = \sqrt{a^2 + x^2}$$

zwischen Funkbake 2 und OBU 11 anzupassen, und zwar so, dass die Wiederholungsrate mit abnehmender Entfernung e erhöht und mit zunehmender Entfernung e verringert wird, d.h.

$$f_A \equiv \frac{1}{e} \ .$$

Dadurch kann eine größere zeitliche Auflösung bzw. Abtastrate der Abtastwerte $27_i$ in der Nähe des interessierenden Dopplersprungs erreicht werden, was der Genauigkeit der Bestimmung des Wendepunkts 20 und der Steigung $f_B$' im Wendepunkt 20 und damit des Abstands a zugute kommt.

Die Entfernung e kann entweder mit Hilfe eines gesonderten Entfernungsmesssensors in der Funkbake 2 oder der OBU 11 ermittelt werden; oder bevorzugt näherungsweise aus einem Messwert RSSI der Empfangssignalstärke ("received signal strength indication") des Signals 10 im Sendeempfänger 8 der Funkbake 2 oder der OBU 11 selbst, d.h.

$$f_A \equiv RSSI \ .$$

Bei Verwendung von BST-, WSA- oder Echo-Nachrichten der Funkbake 2, sei es als Datenpakete 10' der Funkbake 2 zur Auswertung in der OBU 11 oder zur Auslösung entsprechender Antwort-Datenpakete 10' der OBU 11 zur Auswertung in der Funkbake 2, kann die Wiederholungsrate $f_A$ in beiden Varianten in Abhängigkeit der Empfangssignalstärke RSSI der jeweiligen Antwort-Datenpakete der OBU 11 variiert werden.

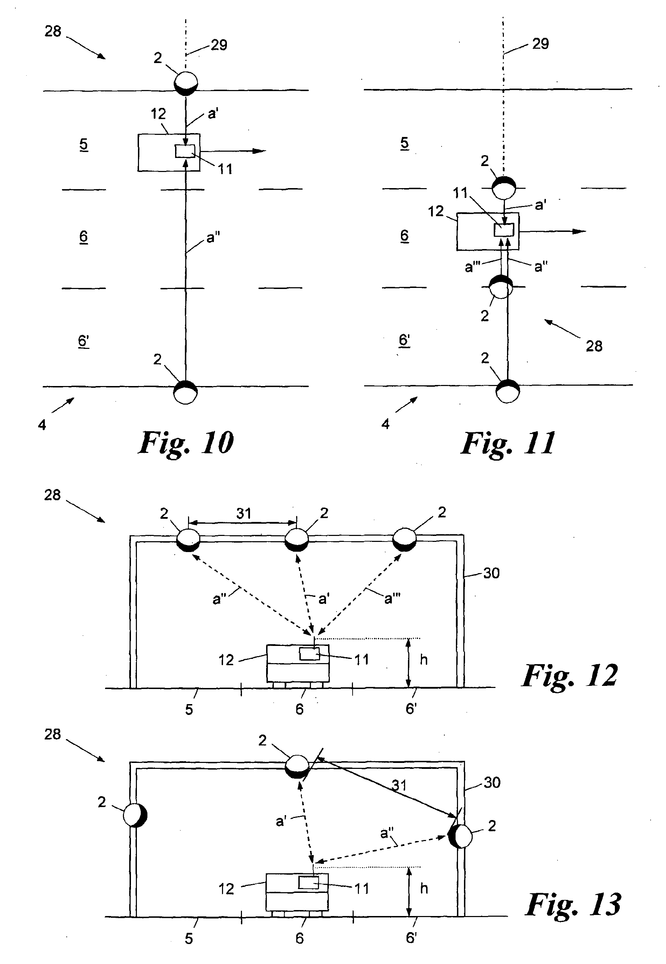

Die Fig. 10 bis 13 und 15 zeigen verschiedene Varianten einer Anlage 28 zur Bestimmung der von Fahrzeugen 12 benutzten Fahrspur 5, 6, 6' einer mehrspurigen Straße 4, welche Anlage 28 mehrere Funkbaken 2 der geschilderten Art umfasst. Die Funkbaken 2 können jeweils eigene lokale Rechner 7 oder einen gemeinsamen lokalen Rechner 7 haben und stehen über ein entsprechendes lokales Datennetz (nicht gezeigt) untereinander und über die Datenverbindung 3 mit der (nicht gezeigten) Zentrale des Straßenmautsystems 1 in Verbindung.

Die Funkbaken 2 der Anlage 28 befinden sich alle etwa in derselben Normalebene 29 zur Straßenlängsrichtung x und können auf etwa derselben Höhe über der Straße 4 (Fig. 10, 11, 12, 15) oder auf unterschiedlichen Höhen (Fig. 13, 15) angebracht werden, u.zw. sowohl seitlich beidseits der Straße 4 (Fig. 10), neben bzw. zwischen den Fahrspuren 5, 6, 6' (Fig. 11), über der Straße 4 an einem die Straße 4 überspannenden Brückenträger 30 (Fig. 12), in einer Kombination dieser Anbringungsarten seitlich und oberhalb der Straße 4 (Fig. 13) oder seitlich an einem mobilen Kontrollfahrzeug 2' (Fig. 15). Jede der Funkbaken 2 ermittelt ihren jeweiligen Abstand a', a", a"' zu einer passierenden OBU 11 in der Normalebene 29. Die so ermittelten Abstände a', a" und a"' können - je nach Anordnung der Funkbaken-verschiedentlich ausgewertet werden:

In jenen Ausführungsformen der Fig. 10, 11, 12 und 15, in welchen sich die Funkbaken 2 auf etwa derselben Höhe bezüglich der Straße 4 befinden, kann - wenn jede Funkbake 2 einer Fahrspur 5, 6, 6' zugeordnet ist - anhand jener Funkbake 2, welche den kleinsten Abstand a', a", a"' misst, direkt die jeweilige Fahrspur 5, 6, 6' bestimmt werden.

Die Mehrheit von Funkbaken 2 der Anlage 28 kann andererseits auch zur Erhöhung der Genauigkeit der Abstandsbestimmung herangezogen werden, indem unter mehreren Funkbaken 2 und ihren ermittelten Abständen a', a", a"' jener Abstand für die weitere Auswertung herangezogen wird, welcher am kleinsten ist, beispielsweise in den Fig. 10, 11 und 12 der Abstand a'. Dies nützt den Effekt aus, dass das Lösen der obigen Gleichungen (1) - (4) in einem Fixkomma-Rechner 7 zu einem genaueren Ergebnis führt, wenn die Steigung $f_B$' nicht zu flach ist, andererseits aber auch ein Mindestabstand a aufgrund des Aufstellungsorts der Bake 2 nicht unterschritten wird, d.h. die Steigung $f_B$' nicht zu groß ist, dass sie in einem zeitdiskreten System nicht mehr mit einer ausreichenden Anzahl von Abstandswerten $27_i$ aufgelöst werden könnte.

In einer dritten Variante kann die Mehrzahl von Funkbaken 2 der Anlage 28 dazu herangezogen werden, durch trigonometrische Triangulation - in Kenntnis der Montageorte der Funkbaken 2 und ihrer gegenseitigen Abstände 31 - den Querabstand a und optional auch die Höhe h der OBU 11 über der Straße 4 zu berechnen (Fig. 12, 13, 15).

Alle genannten Auswertungen der Mehrzahl von Funkbaken 2 können z.B. in einem oder mehreren der Rechner 7 ("dritte Auswerteeinrichtung") durchgeführt werden.

Fig. 14 zeigt die Verwendung einer Funkbake 2 an einem mobilen Kontrollfahrzeug 2' des Straßenmautsystems 1 und Fig. 15 die Verwendung zweier Funkbaken 2 in der Art einer Anlage 28. Auf unterschiedlichen Fahrspuren 5, 6, 6' das Kontrollfahrzeug 2' passierende Fahrzeuge 12 können damit anhand ihrer unterschiedlichen Passageabstände $a_1$, $a_2$ voneinander unterschieden werden. Wenn gemäß Fig. 15 mindestens zwei Funkbaken 2 am Kontrollfahrzeug 2' mit gegenseitigem Abstand 31 montiert werden, z.B. auf beiden Seiten des Kontrollfahrzeugs 2', kann anhand der von den einzelnen Funkbaken 2 gemessenen Passageabstände $a_1$, $a_2$ auch festgestellt werden, ob ein passierendes Fahrzeug 12 links oder rechts am Kontrollfahrzeug 2' vorbeigefahren ist.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zum Ermitteln des Abstands (a) zwischen einer Funkbake (2) und einem sie passierenden Fahrzeuggerät (11) in einem Straßenmautsystem (1), wobei zumindest eine der beiden Komponenten Funkbake (2) und Fahrzeuggerät (11) ein Signal (10) mit einem bekannten zeitlichen Verlauf seiner Frequenz ($f_S$) aussendet, **gekennzeichnet durch** die Schritte:

   Empfangen des Signals (10) in der anderen der beiden Komponenten (2, 11) bei der Passage und Aufzeichnen des zeitlichen Verlaufes (13, 14) seiner Frequenz ($f_B$) relativ zum bekannten zeitlichen Verlauf;
   Detektieren einer einen ersten Schwellwert ($\sigma$) überschreitenden Änderung (17) im aufgezeichneten Frequenzverlauf (13, 14);
   Aufsuchen zweier zeitlich vor und nach der detektierten Änderung (17) liegender Fernbereiche (15, 16) im Frequenzverlauf (13, 14), welche eine Frequenzänderung ($f_B$') unter einem zweiten Schwellwert ($\varepsilon$) zeigen;
   Skalieren des aufgezeichneten Frequenzverlaufes (13, 14) derart, dass die Fernbereiche (15, 16) vorgegebene Werte ($\pm\Delta F$) annehmen; und
   Ermitteln des genannten Abstandes (a) aus dem skalierten Frequenzverlauf (13', 14')

2. Verfahren nach Anspruch 1, **dadurch gekennzeichnet, dass** der genannte Abstand (a) aus der Steigung ($f_B$') des skalierten Frequenzverlaufes (13', 14') in einem Wendepunkt (20) desselben ermittelt wird.

3. Verfahren nach Anspruch 1, **dadurch gekennzeichnet, dass** der genannte Abstand (a) aus einem zwischen einem Wendepunkt (20) des skalierten Frequenzverlaufes (13', 14') und einem Fernbereich (15, 16) liegenden Frequenzwert ($f_B$) des skalierten Frequenzverlaufs ermittelt wird.

4. Verfahren nach Anspruch 1, **dadurch gekennzeichnet, dass** der genannte Abstand (a) aus einem Integral ($F_B$) des skalierten Frequenzverlaufes (13', 14') über einen zwischen einem Wendepunkt (20) desselben und einem Fernbereich (15, 16) liegenden Abschnitt ($\Delta t$) ermittelt wird.

5. Verfahren nach einem der Ansprüche 1 bis 4, **dadurch gekennzeichnet, dass** das Signal (10) von der Funkbake (2) ausgesandt und vom Fahrzeuggerät (11) empfangen wird, wobei die genannten Schritte des Aufzeichnens, Detektierens, Aufsuchens, Skalierens und Ermittelns vom Fahrzeuggerät (11) durchgeführt werden.

6. Verfahren nach Anspruch 5, **dadurch gekennzeichnet, dass** das Signal (10) intermittierend ausgesandt wird und der Frequenzverlauf (13, 14) zeitdiskret für Zeitpunkte ($27_i$), zu denen das Signal (10) empfangen wird, verarbeitet wird.

7. Verfahren nach Anspruch 6, **dadurch gekennzeichnet, dass** das Signal (10) durch ein wiederholtes Abfragesignal (10') der Funkbake (2) gebildet wird, das passierende Fahrzeuggeräte (11) zur Antwort auffordert.

8. Verfahren nach Anspruch 7, **dadurch gekennzeichnet, dass** die Wiederholungsrate ($f_A$) des Abfragesignals (10') adaptiv an einen zumindest näherungsweisen Messwert der Entfernung (e) zwischen Funkbake (2) und Fahrzeuggerät (11) angepasst wird, bevorzugt an die Empfangssignalstärke (RSSI) eines in der Funkbake (2) empfangenen Antwort-Signals des Fahrzeuggeräts (11).

9. Verfahren nach einem der Ansprüche 1 bis 8, **dadurch gekennzeichnet, dass** das Signal (10) vom Fahrzeuggerät (11) ausgesandt und von der Funkbake (2) empfangen wird, wobei die genannten Schritte des Aufzeichnens, Detektierens, Aufsuchens, Skalierens und Ermittelns von der Funkbake (2) durchgeführt werden.

10. Verfahren nach Anspruch 9, **dadurch gekennzeichnet, dass** das Signal (10) intermittierend ausgesandt wird und der Frequenzverlauf (13, 14) zeitdiskret für Zeitpunkte ($27_i$), zu denen das Signal (10) empfangen wird, verarbeitet wird.

11. Verfahren nach Anspruch 10, **dadurch gekennzeichnet, dass** das Signal (10) durch eine Folge von Antwortsignalen des Fahrzeuggeräts (11) gebildet wird, die jeweils als Antwort auf ein wiederholtes Abfragesignal der Funkbake (2) gegeben werden.

12. Verfahren nach Anspruch 11, **dadurch gekennzeichnet, dass** die Wiederholungsrate ($f_A$) des Abfragesignals adaptiv an einen zumindest näherungsweisen Messwert der Entfernung (e) zwischen Funkbake (2) und Fahrzeuggerät (11) angepasst wird, bevorzugt an die Empfangssignalstärke (RSSI) des in der Funkbake (2) empfangenen Signals (10).

13. Verfahren, umfassend ein erstes Verfahren nach einem der Ansprüche 5 bis 8 und ein zweites Verfahren nach einem der Ansprüche 9 bis 12, **dadurch gekennzeichnet, dass** zumindest eine der beiden Komponenten Funkbake (2) und Fahrzeuggerät (11) den von ihr ermittelten Abstand (a) an die andere der beiden Komponenten (11, 2) sendet, welche den so empfangenen Abstand (a) mit dem von ihr selbst ermittelten Abstand (a) zu Überprüfungszwecken vergleicht.

14. Verfahren nach einem der Ansprüche 1 bis 13, **dadurch gekennzeichnet, dass** aus dem Abstand (a) die Fahrspur (5, 6, 6') einer mehrspurigen Straße (4) bestimmt wird, auf welcher sich das Fahrzeug (12) bewegt.

15. Verfahren nach den Ansprüchen 5 und 14, **dadurch gekennzeichnet, dass** die Fahrspurbestimmung im Fahrzeuggerät (11) erfolgt, dass eine Information über die bestimmte Fahrspur (5, 6, 6') vom Fahrzeuggerät (11) an die Funkbake (2) gesendet wird, und dass die Funkbake (2) die empfangene Fahrspurinformation mit einem von ihr selbst ermittelten Abstand (a) gegenprüft.

16. Funkbake (2) für ein Straßenmautsystem (1) zum Ermitteln des Abstandes (a) eines diese passierenden Fahrzeuges (12), welches mit einem Fahrzeuggerät (11) ausgestattet ist, das ein Signal (10) mit einem bekannten zeitlichen Verlauf (13, 14) seiner Frequenz ($f_S$) aussendet, **gekennzeichnet durch**:

einen Empfänger (8), welcher zum Empfangen des Signals (10) eines passierenden Fahrzeuges (12) ausgebildet ist;
einen an den Empfänger angeschlossenen Speicher (21), der zum Aufzeichnen des zeitlichen Verlaufes (13, 14) der Frequenz ($f_B$) des empfangenen Signals (10) relativ zum bekannten zeitlichen Verlauf ausgebildet ist;
einen an den Speicher (21) angeschlossenen Detektor (22), welcher zum Detektieren einer einen ersten Schwellwert ($\sigma$) überschreitenden Änderung (17) im aufgezeichneten Frequenzverlauf (13, 14) ausgebildet ist;
eine an den Detektor (22) und den Speicher (21) angeschlossene erste Auswerteeinrichtung (23), die zum Aufsuchen zweier zeitlich vor und nach der detektierten Änderung (17) liegender Fernbereiche (15, 16) im Frequenzverlauf (13, 14) ausgebildet ist, welche eine Frequenzänderung ($f_B'$) unter einem zweiten Schwellwert ($\varepsilon$) zeigen;
einen an den Speicher (21) und die erste Auswerteeinrichtung (23) angeschlossenen Skalierer (24), der dazu ausgebildet ist, den aufgezeichneten Frequenzverlauf (13, 14) so zu skalieren, dass die Fernbereiche (15, 16) vorgegebene Werte ($\pm\Delta F$) annehmen; und
eine dem Skalierer (24) nachgeschaltete zweite Auswerteeinrichtung (25), die zum Ermitteln des Abstands (a) aus dem skalierten Frequenzverlauf (13', 14') ausgebildet ist.

17. Funkbake nach Anspruch 16, **dadurch gekennzeichnet, dass** die zweite Auswerteeinrichtung (25) dafür ausgebildet ist, den genannten Abstand (a) aus der Steigung ($f_B'$) des skalierten Frequenzverlaufes (13', 14') in einem Wendepunkt (20) desselben zu ermitteln.

18. Funkbake nach Anspruch 16, **dadurch gekennzeichnet, dass** die zweite Auswerteeinrichtung (25) dafür ausgebildet ist, den genannten Abstand (a) aus einem zwischen einem Wendepunkt (20) des skalierten Frequenzverlaufes (13', 14') und einem Fernbereich (15, 16) liegenden Frequenzwert ($f_B$) des skalierten Frequenzverlaufs zu ermitteln.

19. Funkbake nach Anspruch 16, **dadurch gekennzeichnet, dass** die zweite Auswerteeinrichtung (25) dafür ausgebildet ist, den genannten Abstand (a) aus einem Integral ($F_B$) des skalierten Frequenzverlaufes (13', 14') über einen zwischen einem Wendepunkt (20) desselben und einem Fernbereich (15, 16) liegenden Abschnitt ($\Delta t$) zu ermitteln.

20. Funkbake nach einem der Ansprüche 16 bis 19, **dadurch gekennzeichnet, dass** sie einen Sender (8) zum wiederholten Aussenden eines Abfragesignals aufweist, um passierende Fahrzeuggeräte (11) zur Abgabe jeweils eines Antwortsignals ($10_i$) aufzufordern, welche Antwortsignale ($10_i$) das genannte Signal (10) intermittierend bilden, wobei die Funkbake (2) den Frequenzverlauf (13, 14) zeitdiskret für Zeitpunkte ($27_i$), zu denen das Signal (10) vorliegt, verarbeitet.

21. Funkbake nach Anspruch 20, **dadurch gekennzeichnet, dass** die Wiederholungsrate ($f_A$) des Abfragesignals adaptiv an einen zumindest näherungsweisen Messwert der Entfernung (e) zwischen Funkbake (2) und Fahrzeuggerät (11) angepasst wird, bevorzugt an die Empfangssignalstärke (RSSI) des in der Funkbake (2) empfangenen Signals (10).

**22.** Funkbake nach Anspruch 20 oder 21, **dadurch gekennzeichnet, dass** der Sender (8) ein CEN-DSRC-, WAVE- oder ITS-G5-Sendeempfänger und sein Abfragesignal eine Beacon-Service-Table- oder Wave-Service-Announcement-Nachricht ist.

**23.** Funkbake nach einem der Ansprüche 16 bis 22, **dadurch gekennzeichnet, dass** sie an einer mehrspurigen Straße (4) montiert und der Differenzierer (25) dafür ausgebildet ist, aus dem Abstand (a) die Fahrspur (5, 6, 6') zu bestimmen, auf welcher das Fahrzeug (12) passiert.

**24.** Funkbake nach einem der Ansprüche 16 bis 23, **dadurch gekennzeichnet, dass** sie auf einem Kontrollfahrzeug (2') des Straßenmautsystems (1) montiert ist.

**25.** Anlage zur Bestimmung der Fahrspur (5, 6, 6') eines mit einem Fahrzeuggerät (11) passierenden Fahrzeuges (12) auf einer mehrspurigen Straße (4), umfassend
zumindest zwei Funkbaken (2) nach einem der Ansprüche 16 bis 24, welche in einer Normalebene (29) zur Straßenlängsrichtung (x) etwa auf gleicher Höhe mit gegenseitigem Abstand (31) liegen und jeweils ihren Abstand (a) zum Fahrzeuggerät (11) ermitteln, und
eine an die Funkbaken (2) angeschlossene dritte Auswerteeinrichtung (7), welche deren ermittelte Abstände (a', a", a"') empfängt, unter diesen den kleinsten Abstand (a) auswählt und daraus die Fahrspur (5, 6, 6') ermittelt.

**26.** Anlage nach den Ansprüchen 24 und 25, **dadurch gekennzeichnet, dass** die beiden Funkbaken (2) auf jeweils einer Seite des Kontrollfahrzeugs (2') montiert sind.

**27.** Anlage zur Bestimmung der Fahrspur (5, 6, 6') eines mit einem Fahrzeuggerät (11) passierenden Fahrzeuges (12) auf einer mehrspurigen Straße (4), umfassend
zumindest zwei Funkbaken (2) nach einem der Ansprüche 16 bis 24, welche in einer Normalebene (29) zur Straßenlängsrichtung (x) mit gegenseitigem Abstand (31) liegen und jeweils ihren Abstand (a', a", a"') zum Fahrzeuggerät (11) ermitteln, und
eine an die Funkbaken (2) angeschlossene dritte Auswerteeinrichtung (7), welche deren ermittelte Abstände (a', a", a"') empfängt und aus der Lage der Funkbaken, ihrem gegenseitigen Abstand (31) und den ermittelten Abständen (a', a", a"') durch Triangulation die Fahrspur (5, 6, 6') ermittelt.

**28.** Fahrzeuggerät für ein Straßenmautsystem zum Ermitteln des Abstandes (a', a", a"') zu einer Funkbake (2) des Straßenmautsystems (1), die ein Signal (10) mit einem bekannten zeitlichen Verlauf seiner Frequenz aussendet, **gekennzeichnet durch**:

einen Empfänger (8), welcher zum Empfangen des Signals (10) einer Funkbake (2) ausgebildet ist;
einen an den Empfänger (8) angeschlossenen Speicher (21), der zum Aufzeichnen des zeitlichen Verlaufes (13, 14) der Frequenz ($f_B$) des empfangenen Signals (10) relativ zum bekannten zeitlichen Verlauf ausgebildet ist;
einen an den Speicher (21) angeschlossenen Detektor (22), welcher zum Detektieren einer einen ersten Schwellwert ($\sigma$) überschreitenden Änderung (17) im aufgezeichneten Frequenzverlauf (13, 14) ausgebildet ist;
eine an den Detektor (22) und den Speicher (21) angeschlossene erste Auswerteeinrichtung (23), die zum Aufsuchen zweier zeitlich vor und nach der detektierten Änderung (17) liegender Fernbereiche (15, 16) im Frequenzverlauf (13, 14) ausgebildet ist, welche eine Frequenzänderung ($f_B'$) unter einem zweiten Schwellwert ($\varepsilon$) zeigen;
einen an den Speicher (21) und die erste Auswerteeinrichtung (23) angeschlossenen Skalierer (24), der dazu ausgebildet ist, den aufgezeichneten Frequenzverlauf (13, 14) so zu skalieren, dass die Fernbereiche (15, 16) vorgegebene Werte ($\pm\Delta F$) annehmen; und
eine dem Skalierer nachgeschaltete zweite Auswerteeinrichtung (25), die zum Ermitteln des Abstands (a) aus dem skalierten Frequenzverlauf (13', 14') ausgebildet ist.

**29.** Fahrzeuggerät nach Anspruch 28, **dadurch gekennzeichnet, dass** die zweite Auswerteeinrichtung (25) dafür ausgebildet ist, den genannten Abstand (a) aus der Steigung ($f_B'$) des skalierten Frequenzverlaufes (13', 14') in einem Wendepunkt (20) desselben zu ermitteln.

**30.** Fahrzeuggerät nach Anspruch 28, **dadurch gekennzeichnet, dass** die zweite Auswerteeinrichtung (25) dafür ausgebildet ist, den genannten Abstand (a) aus einem zwischen einem Wendepunkt (20) des skalierten Frequenzverlaufes (13', 14') und einem Fernbereich (15, 16) liegenden Frequenzwert (f$_B$) des skalierten Frequenzverlaufs zu ermitteln.

31. Fahrzeuggerät nach Anspruch 28, **dadurch gekennzeichnet, dass** die zweite Auswerteeinrichtung (25) dafür ausgebildet ist, den genannten Abstand (a) aus einem Integral (F$_B$) des skalierten Frequenzverlaufes (13', 14') über einen zwischen einem Wendepunkt (20) desselben und einem Fernbereich (15, 16) liegenden Abschnitt (Δt) zu ermitteln.

32. Fahrzeuggerät nach einem der Ansprüche 28 bis 31, **dadurch gekennzeichnet, dass** es den Frequenzverlauf (13, 14) zeitdiskret für Zeitpunkte (27$_i$), zu denen das Signal (10) empfangen wird, verarbeitet.

33. Fahrzeuggerät nach einem der Ansprüche 28 bis 32, **dadurch gekennzeichnet, dass** der Differenzierer (25) dafür ausgebildet ist, aus dem Abstand (a', a", a"') die Fahrspur (5, 6, 6') einer mehrspurigen Straße (4) zu bestimmen, auf welcher sich das Fahrzeuggerät (11) befindet.

34. Fahrzeuggerät nach Anspruch 33, **dadurch gekennzeichnet, dass** es einen Sender (8) aufweist und dafür ausgebildet ist, eine Information über die bestimmte Fahrspur (5, 6, 6') an eine Funkbake (2) zu senden.

**Claims**

1. Method for determining the distance (a) between a radio beacon (2) and an onboard unit (11) passing the beacon in a road toll system (1), wherein at least one of the two components, radio beacon (2) and onboard unit (11), emits a signal (10) with a known curve of its frequency (f$_S$) over time, **characterised by** the steps:

    receiving the signal (10) in the other of the two components (2, 11) during passage and recording the curve (13, 14) of its frequency (f$_B$) over time in relation to the known curve over time;
    detecting a change (17) in the recorded frequency curve (13, 14) exceeding a first threshold value (σ);
    looking for two far regions (15, 16) in the frequency curve (13, 14) lying before and after the detected change (17) in time that show a frequency change (f$_B$') below a second threshold value (ε);
    scaling the recorded frequency curve (13, 14) in such a manner that the far regions (15, 16) assume predetermined values (±ΔF); and
    determining the said distance (a) from the scaled frequency curve (13', 14').

2. Method according to claim 1, **characterised in that** the said distance (a) is determined from the gradient (f$_B$') of the scaled frequency curve (13', 14') in an inflection point (20) thereof.

3. Method according to claim 1, **characterised in that** the said distance (a) is determined from a frequency value (f$_B$) of the scaled frequency curve (13', 14') lying between an inflection point (20) of the scaled frequency curve and a far region (15, 16).

4. Method according to claim 1, **characterised in that** the said distance (a) is determined from an integral (F$_B$) of the scaled frequency curve (13', 14') over a section (At) lying between an inflection point (20) thereof and a far region (15, 16).

5. Method according to one of claims 1 to 4, **characterised in that** the signal (10) is emitted by the radio beacon (2) and received by the onboard unit (11), wherein the said steps of recording, detecting, seeking, scaling and determining are conducted by the onboard unit (11).

6. Method according to claim 5, **characterised in that** the signal (10) is emitted intermittently and the frequency curve (13, 14) is processed in a time-discrete manner for time points (27$_i$), at which the signal (10) is received.

7. Method according to claim 6, **characterised in that** the signal (10) is formed by a repeated request signal (10') of the radio beacon (2), which prompts passing onboard units (11) to respond.

8. Method according to claim 7, **characterised in that** the repetition rate (f$_A$) of the request signal (10') is adaptively matched to an at least approximate measured value of the distance (e) between the radio beacon (2) and the onboard unit (11), preferably to the received signal strength (RSSI) of a response signal of the onboard unit (11) received in the radio beacon (2).

9. Method according to one of claims 1 to 8, **characterised in that** the signal (10) is emitted by the onboard unit (11) and received by the radio beacon (2), wherein the said steps of recording, detecting, seeking, scaling and determining are conducted by the radio beacon (2).

10. Method according to claim 9, **characterised in that** the signal (10) is emitted intermittently and the frequency curve (13, 14) is processed in a time-discrete manner for time points ($27_i$), at which the signal (10) is received.

11. Method according to claim 10, **characterised in that** the signal (10) is formed by a sequence of response signals of the onboard unit (11), which are respectively passed to the radio beacon (2) as response to a repeated request signal.

12. Method according to claim 11, **characterised in that** the repetition rate ($f_A$) of the request signal is adaptively matched to an at least approximate measured value of the distance (e) between the radio beacon (2) and the onboard unit (11), preferably to the received signal strength (RSSI) of the signal (10) received in the radio beacon (2).

13. Method comprising a first method according to one of claims 5 to 8 and a second method according to one of claims 9 to 12, **characterised in that** at least one of the two components, the radio beacon (2) and the onboard unit (11), transmits the distance (a) it has determined to the other of the two components (11, 2), which compares the thus received distance (a) with the distance (a) it has itself determined for checking purposes.

14. Method according to one of claims 1 to 13, **characterised in that** the road lane (5, 6, 6') of a multi-lane road (4), in which the vehicle (12) is moving, is determined from the distance (a).

15. Method according to claims 5 and 14, **characterised in that** the determination of the road lane occurs in the onboard unit (11), that information concerning the determined road lane (5, 6, 6') is transmitted from the onboard unit (11) to the radio beacon (2), and that the radio beacon (2) cross-checks the road lane information against a distance (a) it has itself determined.

16. Radio beacon (2) for a road toll system (1) for determining the distance (a) of a vehicle (12) passing the radio beacon, which vehicle is equipped with an onboard unit (11), which emits a signal (10) with a known curve (13, 14) of its frequency ($f_S$) over time, **characterised by**:

   a receiver (8), which is configured to receive the signal (10) of a passing vehicle (12);
   a memory (21) connected to the receiver, which is configured to record the curve (13, 14) of the frequency ($f_B$) of the received signal (10) over time in relation to the known curve over time;
   a detector (22), which is connected to the memory (21) and is configured to detect a change (17) in the recorded frequency curve (13, 14) exceeding a first threshold value ($\sigma$);
   a first evaluation device (23), which is connected to the detector (22) and the memory (21) and is configured to look for two far regions (15, 16) in the frequency curve (13, 14) lying before and after the detected change (17) in time that show a frequency change ($f_B'$) below a second threshold value ($\varepsilon$);
   a scaling device (24), which is connected to the memory (21) and the first evaluation device (23) and is configured to scale the recorded frequency curve (13, 14) in such a manner that the far regions (15, 16) assume predetermined values ($\pm\Delta F$); and
   a second evaluation device (25), which is connected after the scaling device (24) and is configured to determine the distance (a) from the scaled frequency curve (13', 14').

17. Radio beacon according to claim 16, **characterised in that** the second evaluation device (25) is configured to determine the said distance (a) from the gradient ($f_B'$) of the scaled frequency curve (13', 14') in an inflection point (20) thereof.

18. Radio beacon according to claim 16, **characterised in that** the second evaluation device (25) is configured to determine the said distance (a) from a frequency value ($f_B$) of the scaled frequency curve lying between an inflection point (20) of the scaled frequency curve (13', 14') and a far region (15, 16).

19. Radio beacon according to claim 16, **characterised in that** the second evaluation device (25) is configured to determine the said distance (a) from an integral ($F_B$) of the scaled frequency curve (13', 14') over a section (At) lying between an inflection point (20) thereof and a far region (15, 16).

20. Radio beacon according to one of claims 16 to 19, **characterised in that** it has a transmitter (8) for repeated emission of a request signal in order to prompt passing onboard units (11) to respectively emit a response signal ($10_i$), which response signals ($10_i$) intermittently form the said signal (10), wherein the radio beacon (2) processes the frequency curve (13, 14) in a time-discrete manner for time points ($27_i$), at which the signal (10) is received.

21. Radio beacon according to claim 20, **characterised in that** the repetition rate ($f_A$) of the request signal is adaptively matched to an at least approximate measured value of the distance (e) between the radio beacon (2) and the onboard unit (11), preferably to the received signal strength (RSSI) of the signal (10) received in the radio beacon (2).

22. Radio beacon according to claim 20 or 21, **characterised in that** the transmitter (8) is a CEN-DSRC, WAVE or ITS-G5 transceiver and its request signal is a Beacon Service Table or WAVE Service Announcement message.

23. Radio beacon according to one of claims 16 to 22, **characterised in that** it is installed on a multi-lane road (4) and the differentiator (25) is configured to determine the road lane (5, 6, 6'), in which the vehicle (12) is moving, from the distance (a).

24. Radio beacon according to one of claims 16 to 23, **characterised in that** it is mounted on a control vehicle (2') of the road toll system (1).

25. Assembly for determining the road lane (5, 6, 6') of a passing vehicle (12) with an onboard unit (11) on a multi-lane road (4), comprising
at least two radio beacons (2) according to one of claims 16 to 24, which lie in a normal plane (29) to the road longitudinal direction (x) approximately at the same level at a distance (31) from one another and respectively determine their distance (a) from the onboard unit (11), and
a third evaluation device (7), which is connected to the radio beacons (2) and receives their determined distances (a', a", a"'), selects the shortest distance (a) from these and determines the road lane (5, 6, 6') therefrom.

26. Assembly according to claims 24 and 25, **characterised in that** the two radio beacons (2) are respectively mounted on one side of the control vehicle (2').

27. Assembly for determining the road lane (5, 6, 6') of a passing vehicle (12) with an onboard unit (11) on a multi-lane road (4), comprising
at least two radio beacons (2) according to one of claims 16 to 24, which lie in a normal plane (29) to the road longitudinal direction (x) at a distance (31) from one another and respectively determine their distance (a', a", a"') from the onboard unit (11), and
a third evaluation device (7), which is connected to the radio beacons (2) and receives their determined distances (a', a", a"') and determines the road lane (5, 6, 6') by triangulation from the position of the radio beacons, their distance (31) from one another and the determined distances (a', a", a"').

28. Onboard unit for a road toll system for determining the distance (a', a", a"') from a radio beacon (2) of the road toll system (1), which emits a signal (10) with a known curve of its frequency over time, **characterised by**:

a receiver (8), which is configured to receive the signal (10) of a radio beacon (2);
a memory (21) connected to the receiver (8), which is configured to record the curve (13, 14) of the frequency ($f_B$) of the received signal (10) over time in relation to the known curve over time;
a detector (22), which is connected to the memory (21) and is configured to detect a change (17) in the recorded frequency curve (13, 14) exceeding a first threshold value ($\sigma$);
a first evaluation device (23), which is connected to the detector (22) and the memory (21) and is configured to look for two far regions (15, 16) in the frequency curve (13, 14) lying before and after the detected change (17) in time that show a frequency change ($f_B'$) below a second threshold value ($\varepsilon$);
a scaling device (24), which is connected to the memory (21) and the first evaluation device (23) and is configured to scale the recorded frequency curve (13, 14) in such a manner that the far regions (15, 16) assume prede-termined values ($\pm\Delta F$); and
a second evaluation device (25) connected after the scaling device, which is configured to determine the distance (a) from the scaled frequency curve (13', 14').

**29.** Onboard unit according to claim 28, **characterised in that** the second evaluation device (25) is configured to determine the said distance (a) from the gradient ($f_B$') of the scaled frequency curve (13', 14') in an inflection point (20) thereof.

**30.** Onboard unit according to claim 28, **characterised in that** the second evaluation device (25) is configured to determine the said distance (a) from a frequency value ($f_B$) of the scaled frequency curve lying between an inflection point (20) of the scaled frequency curve (13', 14') and a far region (15, 16).

**31.** Onboard unit according to claim 28, **characterised in that** the second evaluation device (25) is configured to determine the said distance (a) from an integral ($F_B$) of the scaled frequency curve (13', 14') over a section (At) lying between an inflection point (20) thereof and a far region (15, 16).

**32.** Onboard unit according to one of claims 28 to 31, **characterised in that** it processes the frequency curve (13, 14) in a time-discrete manner for time points ($27_i$), at which the signal (10) is received.

**33.** Onboard unit according to one of claims 28 to 32, **characterised in that** the differentiator (25) is configured to determine the road lane (5, 6, 6') of a multi-lane road (4), in which the onboard unit (11) is located, from the distance (a', a", a"').

**34.** Onboard unit according to claim 33, **characterised in that** it has a transmitter (8) and is configured to transmit information concerning the determined road lane (5, 6, 6') to a radio beacon (2).

**Revendications**

**1.** Procédé pour la détermination de la distance (a) entre une radiobalise (2) et un appareil de véhicule (11) passant devant celle-ci dans un système de péage routier (1), dans lequel au moins l'un des deux composants parmi la radiobalise (2) et l'appareil de véhicule (11) émet un signal (10) avec une fréquence ($f_S$) présentant une courbe temporelle connue, **caractérisé par** les étapes :

réception du signal (10) dans l'autre des deux composants (2, 11) lors du passage et enregistrement de la courbe temporelle (13, 14) de sa fréquence ($f_B$) par rapport à la courbe temporelle connue ; détection d'une modification (17) dépassant une première valeur seuil ($\sigma$) dans la courbe de fréquence (13, 14) enregistrée ; recherche de deux plages lointaines (15, 16) situées avant et après la modification détectée (17) dans la courbe de fréquence (13, 14), lesquelles montrent une modification de fréquence ($f_B$') en-dessous d'une deuxième valeur seuil ($\varepsilon$) ; mise à l'échelle de la courbe de fréquence enregistrée (13, 14) de manière à ce que les plages lointaines (15, 16) adoptent des valeurs prédéfinies ($\pm\Delta F$) ; et détermination de ladite distance (a) à partir de la courbe de fréquence mise à l'échelle (13', 14').

**2.** Procédé selon la revendication 1, **caractérisé en ce que** ladite distance (a) est déterminée à partir de la pente ($f_B$') de la courbe de fréquence mise à l'échelle (13', 14'), dans un point d'inflexion (20) de celle-ci.

**3.** Procédé selon la revendication 1, **caractérisé en ce que** ladite distance (a) est déterminée à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

**4.** Procédé selon la revendication 1, **caractérisé en ce que** ladite distance (a) est déterminée à partir d'une intégrale ($F_B$) de la courbe de fréquence mise à l'échelle (13', 14') sur une section ($\Delta t$) située entre un point d'inflexion (20) de celle-ci et une plage lointaine (15, 16).

**5.** Procédé selon l'une des revendications 1 à 4, **caractérisé en ce que** le signal (10) est émis par la radiobalise (2) et reçu par l'appareil de véhicule (11), dans lequel lesdites étapes d'enregistrement, de détection, de recherche, de mise à l'échelle et de détermination sont exécutées par l'appareil de véhicule (11).

**6.** Procédé selon la revendication 5, **caractérisé en ce que** le signal (10) est envoyé par intermittence et la courbe de fréquence (13, 14) est traitée de manière discrète dans le temps pour les instants ($27_i$) auxquels le signal (10) est reçu.

7. Procédé selon la revendication 6, **caractérisé en ce que** le signal (10) est formé par un signal d'interrogation répété (10') de la radiobalise (2) réclamant une réponse de l'appareil de véhicule (11) passant.

8. Procédé selon la revendication 7, **caractérisé en ce que** le taux de répétition ($f_A$) du signal d'interrogation (10') est adapté de façon adaptative à une valeur de mesure au moins approximative de la distance (e) entre la radiobalise (2) et l'appareil de véhicule (11), de préférence à la force de signal de réception (RSSI) d'un signal de réponse de l'appareil de véhicule (11) reçu dans la radiobalise (2).

9. Procédé selon l'une des revendications 1 à 8, **caractérisé en ce que** le signal (10) est émise par l'appareil de véhicule (11) et reçu par la radiobalise (2), dans lequel lesdites étapes d'enregistrement, de détection, de recherche, de mise à l'échelle et de détermination sont exécutées par la radiobalise (2).

10. Procédé selon la revendication 9, **caractérisé en ce que** le signal (10) est émis par intermittence et la courbe de fréquence (13, 14) est traitée de façon discrète dans le temps pour les instants ($27_i$) auxquels le signal (10) est reçu.

11. Procédé selon la revendication 10, **caractérisé en ce que** le signal (10) est formé par une série de signaux de réponse de l'appareil de véhicule (11), respectivement fournis en réponse à un signal d'interrogation répété de la radiobalise (2).

12. Procédé selon la revendication 11, **caractérisé en ce que** le taux de répétition ($f_A$) du signal d'interrogation est adapté de façon adaptative à une valeur de mesure au moins approximative de la distance (e) entre la radiobalise (2) et l'appareil de véhicule (11), de préférence à la force de signal de réception (RSSI) du signal (10) reçu dans la radiobalise (2).

13. Procédé comprenant un premier procédé selon l'une des revendications 5 à 8 et un deuxième procédé selon l'une des revendications 9 à 12, **caractérisé en ce qu'**au moins l'un des deux composants, parmi la radiobalise (2) et l'appareil de véhicule (11), transmet la distance (a) déterminée par ses propres soins à l'autre des deux composants (11, 2), lequel compare la distance (a) ainsi reçue avec la distance (a) déterminée par ses propres soins, pour effectuer des vérifications.

14. Procédé selon l'une des revendications 1 à 13, **caractérisé en ce que** la voie (5, 6, 6') d'une route à plusieurs voies (4), sur laquelle circule le véhicule (12), est déterminée à partir de la distance (a).

15. Procédé selon l'une des revendications 5 à 14, **caractérisé en ce que** la détermination de la voie de circulation est effectuée dans l'appareil de véhicule (11), **en ce qu'**une information concernant la voie de circulation (5, 6, 6') déterminée est transmise de l'appareil de véhicule (11) à la radiobalise (2), et **en ce que** la radiobalise (2) compare l'information reçue concernant la voie de circulation avec une distance (a) déterminée par ses propres soins.

16. Radiobalise (2) pour un système de péage routier (1) pour la détermination de la distance (a) d'un véhicule (12) passant devant celle-ci, lequel est équipé d'un appareil de véhicule (11) émettant un signal (10) présentant une fréquence ($f_S$) avec une courbe temporelle connue (13, 14), **caractérisée par**
un récepteur (8) conçu pour recevoir le signal (10) d'un véhicule (12) passant ;
une mémoire (21) raccordée au récepteur et conçue pour enregistrer la courbe temporelle (13, 14) de la fréquence ($f_B$) du signal reçu (10) par rapport à la courbe temporelle connue ;
un détecteur (22) raccordé à la mémoire (21) et conçu pour la détection d'une modification (17) dépassant une première valeur seuil ($\sigma$) dans la courbe de fréquence (13, 14) enregistrée ;
un premier dispositif d'évaluation (23) raccordé au détecteur (22) et à la mémoire (21) et conçu pour rechercher deux plages lointaines (15, 16) situées avant et après la modification détectée (17) dans la courbe de fréquence (13, 14), lesquelles montrent une modification de fréquence ($f_B'$) en-dessous d'une deuxième valeur seuil ($\varepsilon$) ;
un dispositif de mise à l'échelle (24) raccordé à la mémoire (21) et au premier dispositif d'évaluation (23) et conçu pour mettre la courbe de fréquence enregistrée (13, 14) à l'échelle, de manière à ce que les plages lointaines (15, 16) adoptent des valeurs prédéfinies ($\pm \Delta F$) ; et
un deuxième dispositif d'évaluation (25) raccordé en aval du dispositif de mise à l'échelle (24) et conçu pour déterminer ladite distance (a) à partir de la courbe de fréquence mise à l'échelle (13', 14').

17. Radiobalise selon la revendication 16, **caractérisée en ce que** le deuxième dispositif d'évaluation (25) est conçu pour déterminer ladite distance (a) à partir de la pente ($f_B$') de la courbe de fréquence mise à l'échelle (13', 14') dans un point d'inflexion (20) de celle-ci.

18. Radiobalise selon la revendication 16, **caractérisée en ce que** le deuxième dispositif d'évaluation (25) est conçu pour déterminer ladite distance (a) à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

19. Radiobalise selon la revendication 16, **caractérisée en ce que** le deuxième dispositif d'évaluation (25) est conçu pour déterminer ladite distance (a) à partir d'une intégrale ($F_B$) de la courbe de fréquence mise à l'échelle (13', 14') sur une section ($\Delta t$) située entre un point d'inflexion (20) de celle-ci et une plage lointaine (15, 16).

20. Radiobalise selon l'une des revendications 16 à 19, **caractérisée en ce qu'**elle comporte un émetteur (8) pour l'émission répétée d'un signal d'interrogation, pour demander à des appareils de véhicule (11) passant d'émettre respectivement un signal de réponse ($10_i$), lesquels signaux de réponse ($10_i$) forment ledit signal (10) par intermittence, dans lequel la radiobalise (2) traite de façon discrète dans le temps la courbe de fréquence (13, 14) pour des instants ($27_i$) auxquels le signal (10) est reçu.

21. Radiobalise selon la revendication 20, **caractérisée en ce que** le taux de répétition ($f_A$) du signal d'interrogation est adaptée de façon adaptative à une valeur de mesure au moins approximative de la distance (e) entre la radiobalise (2) et l'appareil de véhicule (11), de préférence à la force de signal de réception (RSSI) du signal (10) reçu dans la radiobalise (2).

22. Radiobalise selon la revendication 20 ou 21, **caractérisée en ce que** l'émetteur (8) est un émetteur-récepteur CEN-DSRC, WAVE ou ITS-G5, et son signal d'interrogation est un message sous forme de tableau de service de radiobalise ou un message d'annonce de service WAVE.

23. Radiobalise selon l'une des revendications 16 à 22, **caractérisée en ce qu'**elle est installée sur une route à plusieurs voies (4) et le différenciateur (25) est conçu pour déterminer la voie de circulation (5, 6, 6') sur laquelle circule le véhicule (12) à partir de la distance (a).

24. Radiobalise selon l'une des revendications 16 à 23, **caractérisée en ce qu'**elle est installée sur un véhicule de contrôle (2') du système de péage routier (1).

25. Système pour la détermination de la voie de circulation (5, 6, 6') d'un véhicule (12) passant avec un appareil de véhicule (11) sur une route à plusieurs voies (4), comprenant
au moins deux radiobalises (2) selon l'une des revendications 16 à 24, lesquelles se trouvent dans un plan normal (29) par rapport à la direction longitudinale de la route (x), environ à la même hauteur avec un espacement mutuel (31), et déterminent respectivement leur distance (a) par rapport à l'appareil de véhicule (11), et
un troisième dispositif d'évaluation (7) raccordé aux radiobalises (2), lequel reçoit leurs distances déterminées (a', a", a"'), choisit la plus petite distance (a) parmi celles-ci et détermine ainsi la voie de circulation (5, 6, 6').

26. Système selon les revendications 24 et 25, **caractérisée en ce que** les deux radiobalises (2) sont installées respectivement d'un côté du véhicule de contrôle (2').

27. Système pour la détermination de la voie de circulation (5, 6, 6') d'un véhicule (12) passant avec un appareil de véhicule (11) sur une route à plusieurs voies (4), comprenant
au moins deux radiobalises (2) selon l'une des revendications 16 à 24, lesquelles se trouvent dans un plan normal (29) par rapport à la direction longitudinale de la route (x) avec un espacement mutuel (31), et déterminent respectivement leur distance (a', a", a"') par rapport à l'appareil de véhicule (11), et
un troisième dispositif d'évaluation (7) raccordé aux radiobalises (2), lequel reçoit leurs distances déterminées (a', a", a"') et détermine la voie de circulation (5, 6, 6') à partir de la position des radiobalises, de leur espacement mutuel (31) et de leurs distances déterminées (a', a", a"') par triangulation.

28. Appareil de véhicule pour un système de péage routier, pour la détermination de la distance (a', a", a"') par rapport à une radiobalise (2) du système de péage routier (1), laquelle émet un signal (10) avec une fréquence présentant une courbe temporelle connue, **caractérisé par** :

un récepteur (8) conçu pour recevoir le signal (10) d'une radiobalise (2) ;

une mémoire (21) raccordée au récepteur (8), laquelle est conçue pour l'enregistrement de la courbe temporelle (13, 14) de la fréquence ($f_B$) du signal reçu (10) par rapport à la courbe temporelle connue ;

un détecteur (22) raccordé à la mémoire (21) et conçu pour la détection d'une modification (17) dépassant une première valeur seuil ($\sigma$) dans la courbe de fréquence (13, 14) enregistrée ;

un premier dispositif d'évaluation (23) raccordé au détecteur (22) et à la mémoire (21) et conçu pour rechercher deux plages lointaines (15, 16) situées avant et après la modification détectée (17) dans la courbe de fréquence (13, 14), lesquelles montrent une modification de fréquence ($f_B'$) en-dessous d'une deuxième valeur seuil ($\varepsilon$) ;

un dispositif de mise à l'échelle (24) raccordé à la mémoire (21) et au premier dispositif d'évaluation (23) et conçu pour mettre la courbe de fréquence enregistrée (13, 14) à l'échelle, de manière à ce que les plages lointaines (15, 16) adoptent des valeurs prédéfinies ($\pm\Delta F$) ; et

un deuxième dispositif d'évaluation (25) raccordé en aval du dispositif de mise à l'échelle et conçu pour déterminer ladite distance (a) à partir de la courbe de fréquence mise à l'échelle (13', 14').

29. Appareil de véhicule selon la revendication 28, **caractérisé en ce que** le deuxième dispositif d'évaluation (25) est conçu pour déterminer ladite distance (a) à partir de la pente ($f_B'$) de la courbe de fréquence mise à l'échelle (13', 14') dans un point d'inflexion (20) de celle-ci.

30. Appareil de véhicule selon la revendication 28, **caractérisé en ce que** le deuxième dispositif d'évaluation (25) est conçu pour déterminer ladite distance (a) à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

31. Appareil de véhicule selon la revendication 28, **caractérisé en ce que** le deuxième dispositif d'évaluation (25) est conçu pour déterminer ladite distance (a) à partir d'une intégrale ($F_B$) de la courbe de fréquence mise à l'échelle (13', 14') sur une section ($\Delta t$) située entre un point d'inflexion (20) de celle-ci et une plage lointaine (15, 16).

32. Appareil de véhicule selon l'une des revendications 28 à 31, **caractérisé en ce qu'**il traite la courbe de fréquence (13, 14) de façon discrète dans le temps pour les instants ($27_i$) auxquels le signal (10) est reçu.

33. Appareil de véhicule selon l'une des revendications 28 à 32, **caractérisé en ce que** le différenciateur (25) est conçu pour déterminer la voie de circulation (5, 6, 6') d'une route à plusieurs voies (4) sur laquelle se trouve l'appareil de véhicule (11) à partir de la distance (a', a", a"').

34. Appareil de véhicule selon la revendication 33, **caractérisé en ce qu'**il comporte un émetteur (8) et **en ce qu'**il est conçu pour envoyer une information concernant la voie de circulation (5, 6, 6') déterminée à une radiobalise (2).

*Fig. 1*

**Fig. 2**

**Fig. 3**

*Fig. 4*

*Fig. 5*

**Fig. 6**

**Fig. 7**

25

13', 14' → [ $f_B(\Delta t)$ ] → $a_1, a_2$

16, 20

**Fig. 8a**

25

13', 14' → [ $\int_0^{\Delta t} f_B$ ] → $a_1, a_2$

16, 20

**Fig. 8b**

*Fig. 9*

EP 2 564 232 B1

**Fig. 10**

**Fig. 11**

**Fig. 12**

**Fig. 13**

**Fig. 14**

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5790052 A